# EUROPEAN PATENT SPECIFICATION

(11) **EP 2 994 232 B1**
(45) Date of publication and mention of the grant of the patent: **02.05.2018**
(21) Application number: 14730523.9
(22) Date of filing: 13.06.2014
(51) Int. Cl.: B01L 3/00, F16K 99/00

(54) **ROTATABLE MICROFLUIDIC DEVICE WITH DISSOLVABLE RELEASE VALVE AND CONTROL VALVE**
DREHBARE MIKROFLUIDISCHE VORRICHTUNG MIT AUFLÖSBAREM ABLASSVENTIL UND STEUERVENTIL
DISPOSITIF MICROFLUIDIQUE ROTATIF AVEC VANNE DE LIBÉRATION DISSOLVABLE ET VANNE DE CONTRÔLE

(30) Priority: 14.06.2013 GB 201310683
(43) Date of publication of application: 16.03.2016
(73) Proprietor: Dublin City University, Dublin 9 (IE)
(72) Inventor: KINAHAN, David, Athy Co. Kildare (IE); DUCREE, Jens, Ashbourne Co. Meath (IE); DIMOV, Nikolay, Dublin D7 (IE); KEARNEY, Sinead, Co. Kerry (IE); VERESHCHAGINA, Elizaveta, Dublin D9 (IE); GAUGHRAN, Jennifer, Co. Meath (IE); BURGER, Robert, 77978 Schuttertal (DE); BARRETT, Louise, Carlow Co. Carlow (IE)
(74) Representative: Hanna Moore + Curley
(86) International application number: PCT/EP2014/062453
(87) International publication number: WO 2014/198939

(56) References cited:
- GB-A- 2 491 813
- US-A1- 2010 240 022
- US-A1- 2011 094 600
- US-B1- 6 632 399
- GORKIN R ET AL: "Rotationally controlled centrifugo-pneumatic valving utilizing dissolvable films", 2011 16TH INTERNATIONAL SOLID-STATE SENSORS, ACTUATORS AND MICROSYSTEMS CONFERENCE (TRANSDUCERS 2011) : BEIJING, CHINA, 5 - 9 JUNE 2011, IEEE, PISCATAWAY, NJ, 5 June 2011 (2011-06-05), pages 1276-1279, XP031910787, DOI: 10.1109/TRANSDUCERS.2011.5969448 ISBN: 978-1-4577-0157-3 [retrieved on 2011-08-01]

## Description

### Field

The present application relates to a microfluidic device and in particular to a rotatable microfluidic device provided on a centrifugal platform and configured to selectively direct fluids through a predetermined path using one or more valves.. In one configuration the device comprises a first valve in fluid communication with an actuation member, and configured such that actuation of the actuation member effects a retraction of a fluid spacer provided in front of or upstream of the first valve to allow a liquid come into contact with and dissolve the first valve. Desirably this actuation of the actuation member and the subsequent dissolution and opening of the first valve can be event triggered so as to allow for cascading events which mirror a predetermined number of steps in an assay. This sequential opening provides for a selective control of the flow of a fluid within the microfluidic device. In another configuration the present teaching provides a valving arrangement comprising a selective actuation mechanism facilitated by the sequential passing of different fluids passed the valve. In yet another configuration the present teaching provides a multilayer microfluidic device comprising first and second fluid channels provided in different layers of the device, each of the first and second channels leading a common destination and providing an integrated metering and aliquoting arrangement.

### Background

Many key fluidic elements of integrated centrifugal microfluidic platforms (e.g., decanting, metering, mixing, siphoning) are either derived from or can be improved through valving technologies. Sacrificial valves are of particular interest, serving as superior liquid/vapour barriers that act as programmable flow control elements and offering novel capabilities like on-board reagent storage. Traditionally, these sacrificial valves necessitate embedding (fluidically/ pneumatically) isolating materials and actuating those gating mechanisms through complex external triggers.

For example, one of the known valving techniques using a sacrificial material is wax valving, where small quantities of wax are embedded in a microchannel until actuated by a heat source which melts the wax and can allow for liquid to pass. In these setups the valving requires multiple pieces of equipment/processes to manufacture and actuate, i.e., a dispenser, which can melt the wax for initial placement during fabrication and a heat source (resistive heater, laser, etc.) to melt the waxes during operation. Another sacrificial valving scheme is based on melting polymer films by a laser, typically aided by absorptive properties of the sacrificial material. Another sacrificial valving mechanism uses variances in the speed of rotation of the microfluidic device to selectively open individual valves. By changing the rotational speed the pressure experience by the valve can be increased until it reaches a burst pressure which then bursts and ruptures the valve. Manufacturing tolerances and the limited practical spin-rates which may be used can limit the number of valves which can be discretely and/or simply incorporated on a microfluidic device.

An improved microfluidic device incorporating a sacrificial valve for selectively controlling the flow of a fluid within the microfluidic device is described in WO2012164086 co-assigned to the present assignee. There continues to exist a need for controlling the flow of fluid within a microfluidic device.

### Summary

These and other problems are addressed by a microfluidic device which incorporates valves to selectively control the passage of liquid through the device. In accordance with the present teaching the term "fluid" is intended to define a substance that continually deforms (flows) under an applied shear stress. Fluids are a super set of the phases of matter and include liquids, gases, plasmas and, to some extent, plastic solids. It will be appreciated therefore that while all liquids are fluids, not all fluids are liquids.

The present teaching provides a rotatable device in accordance with the claims that follow.

In a first arrangement the present teaching provides a microfluidic device comprising a first valve in fluid communication with an actuation member, which may be provided by a second valve. The first valve is provided with a fluid spacer provided upstream of the first valve, the fluid spacer separating a dissolvable membrane of the first valve from a liquid. Actuation of the actuation member causes a retraction of the fluid spacer and allows the liquid to come into contact with the dissolvable membrane which effects an opening of the first valve. In this way actuation of the first valve is controlled by actuation of the actuation member which is in fluid communication with the first valve.

It will be appreciated that similarly to any rupturable membrane, a valve provided in accordance with the present teaching and also comprising a sacrificial membrane will also mechanically or pneumatically burst above a certain frequency of rotation of the device. It will be understood that the normal operating frequencies of a rotatable microfluidic device provided in accordance with the present teaching will be well below these "destructive" frequencies and in accordance with the present teaching an increasing of the frequency of rotation in itself is not used to effect the dissolving of the sacrificial membrane. In accordance with the present teaching the membrane dissolves due to at least contact with a liquid as opposed to simply increasing the burst pressure on the membrane by increasing the frequency of rotation of the device.

It will be appreciated that certain applications may require both a wetting of a membrane and a certain rotation frequency to achieve an opening of the first valve but in these applications the opening of the first valve will still require actuation of an actuation member

In one implementation the actuation of the actuation member can be used to change the conditions experienced by the first valve such that the frequency of rotation of the device can be maintained at a preset frequency but by actuating the actuation member the burst frequency of the first valve is reduced. In this way the first valve will open after actuation of the actuation member without changing the frequency of rotation of the device.

In instances where the actuation member is a second valve of the system, the second valve may also comprise a dissolvable membrane which selectively dissolves on contact with a predetermined liquid.

By providing a first valve in fluid communication with an actuation member and configured relative to one another such that actuation of the actuation member effects an opening of the first valve, the present teaching provides a sequential opening of individual fluid channels within the microfluidic device and the selective control of the flow of a liquid within the microfluidic device.

Desirably this opening of a first valve is effected without any additional third party or external stimulus. In this way a passive control of sequential valve operation is achieved; the actuation of the actuation member serving to trigger the subsequent opening of additional valves within a microfluidic network.

The first valve, or release valve, desirably comprises a gas tight, liquid dissolvable film and this valve is connected to an outflow. The actuation member which may be provided in the form of a second valve of the system or a control valve, comprises a gas-tight barrier. When the valves are provided in a normally closed configuration a liquid, the working liquid, can be compressed into a pneumatic chamber/microchannel upstream of the release valve but, under normal operating conditions, cannot reach the release valve as it is separated by a fluid spacer formed by compressed gas. In this way, the compressed gas provides a gas pocket between a sacrificial membrane of the release valve and the otherwise advancing working liquid and prevents the working liquid coming into contact with the sacrificial membrane. By suitably arranging the first and second valves relative to one another an opening of the control valve changes the normal working conditions to create a vent to the pneumatic chamber and the reduced pressure allows the working liquid to reach the release valve. In an asymptotic case the vent opens the system to atmosphere. The bringing of the working liquid into contact with the release valve dissolves this valve and opens a path for the working liquid into another microchannel of the microfluidic network.

In certain configurations a channel defining a fluid communication path between the first and second valves is shaped such that the liquid cannot travel out the control valve. This effect can also be incorporated through blocking the channel defining the fluid communication path between the first and second valves using a gas permeable, but liquid impermeable membrane.

The actuation mechanism for the actuation member or control valve may vary and may comprise one or more different mechanisms cooperating with each other to provide an opening of the control valve. For example, the actuation member may be opened through external stimulus such as mechanical, pressure, acoustic, chemical, thermal and irradiation or through contact with some liquid or gas.

In another configuration, the control valve comprises a dissolvable film which can be opened through contact with a liquid. It will be appreciated that dissolving is different to disintegration, the latter resultant typically from an increase in pressure applied to a valve and a subsequent bursting of the valve whereas the former relates to the incorporation of a portion of the valve into the liquid to form a solution.

In another configuration the control valve comprises a deformable membrane which is deformed through external stimulus (such as a mechanical, electrical or pneumatic stimuli which serves to reduce pressure on other side of membrane to effect a retraction of the fluid spacer. In another example an external stimulus could trigger a chemical reaction which reduces the pressure and effects a removal of the fluid spacer element to allow the liquid come into contact with and dissolve the sacrificial membrane.

By providing the first valve as a sacrificial valve, the present teaching allows active valving that provides the strength of a physical barrier in a way that well integrates with production techniques and eliminates the need for peripheral actuation mechanisms.

In accordance with one arrangement, a microfluidic device comprises a channel separated into first and second regions by presence of a first valve comprising a sacrificial membrane within the channel. A liquid is provided in a first region of the channel upstream of the valve, the membrane providing a barrier to the liquid flowing into the second region downstream of the valve. A fluid spacer is provided between the membrane and the liquid and prevents contact between the two. A second valve provided in fluid communication with the first valve and in the normally closed configuration serves to maintain the volume of the fluid spacer upstream of the first valve. By opening the second valve, the fluid spacer dissipates away from the region upstream of the membrane and allows the liquid to operably advance and come into contact with the membrane thereby effecting a dissolving of the membrane. By operably inducing the liquid to flow towards the sacrificial membrane of the first valve, the opening of the second valve initiates contact of the liquid with the sacrificial membrane with the result that the sacrificial membrane dissolves and the liquid may then pass from the first to the second region previously sealed by the first valve.

In accordance with such an arrangement the device is primed to include a fluid spacer in the form for example of a gas pocket provided between the liquid and the sacrificial member of the valve. In the absence of an induced fluid flow, the gas pocket prevents liquid contact with the sacrificial member, i.e. the gas pocket provides a plug or buffer between the liquid and the sacrificial member. Typically the gas pocket is bordered at a first side by the meniscus of the liquid from the first region and at a second side by the gas-tight, sacrificial membrane.

The time delay between activation of the second valve and the opening of the first valve is typically dependent on the time it takes the second valve to open, a rate of breakdown of the gas pocket and the subsequent dissolution rate of the sacrificial membrane. It will be appreciated that other factors which may effect the time delay from actuation to release will include the dissolution of both films and the rate of venting. Additionally the time between sequential releases is also dependent on the time for the dissolving fluid to reach the first valve.

It will be appreciated that the second valve functions as a control valve which is arranged relative to the first valve, a release valve, such that, following activation of the control valve, sequential release of the first valve may be effected without any external intervention such as changes in disk rotation frequency , use of laser ablation techniques etc. This makes this structure highly flexible and highly suitable to a wide variety of biomedical assays where sequential release of reagents is desirable Furthermore in the context of fluid networking it is possible to provide multiple valves in fluid communication with one another to provide a variety of AND/OR relationships. Effectively, a liquid released from activation of one valve can act as activation fluid for effecting opening of a second valve. This cascading behaviour can allow the valves to be networked in a manner such that the valves can be triggered in a defined sequence. This can be particularly useful for bioanalytical methods such as immunoassays where sample and reagent wash steps are conducted in defined sequences. Along with reagent storage, the valves can also be integrated into structures representing laboratory unit operations such as metering, mixing and decanting.

In addition to sequential release of fluid, more complex relationships can also be implemented. For example, should a device be configured with two or more control valves and one release valve, the release valve can be actuated activation of one of the control valves, thus resulting an OR relationship. Similarly, parallel and almost simultaneous release of liquid from two or more reservoirs can be effected by implementing a valve configured with one control valve and two or more release valves

Network relationship can also be implemented by defining the location of the control valves in fluid reservoirs. Parallel and almost simultaneous triggering of two valves can be achieved by positioning the two control valves so that they can each be triggered to open at the same time Similarly, an AND relationship can be implemented by locating a control valve relative to two or more valves provided upstream of the control valve, activation of the control valve requiring activation of each of the two or more upstream valves.

The control or second valve may also comprise a sacrificial membrane. In this way the device may comprise two or more valves comprising sacrificial membranes.

The device desirably comprises drive means which are configured to provide centrifugally / rotationally induced artificial gravity conditions to induce flow of a liquid within the device.

It will be appreciated that the actuation of the actuation member serves to trigger an opening of the first valve. The time taken to actually effect an opening of the first valve is governed by the time for the gas pocket to dissipate away from the sacrificial membrane of the first valve and the dissolution time of the valve itself.

In another configuration the present teaching provides a multilayer microfluidic device comprising first and second channels provided in first and second layers of the multilayer microfluidic device. Each of the first and second channels are in fluid communication with one another through a vertical through hole. A sacrificial valve is provided within or adjacent to the through-hole and in a normally closed configuration serves to prevent passage of a liquid through the through-hole. By selectively opening the sacrificial valve it is possible to allow the flow of a liquid from the first channel to the second channel. The first and second channels are desirably configured within the microfluidic device such that on opening the sacrificial valve, a liquid travelling in the first channel will preferentially go through the through-hole and into the second channel.

The sacrificial valve comprises a sacrificial membrane and is desirably configured to selectively dissolve dependent on the specifics of the liquid contacting the valve. By using a liquid specific membrane it is possible to sequentially flow different liquids passed the valve and the valve will only open when exposed to a specific liquid which targets the specific sacrificial membrane utilised. For example certain membranes may have hydrophobic properties which do not dissolve on exposure to an aqueous solution. Other membranes may be selected for the hydrophilic properties such that they will dissolve on contact with an aqueous solution.

In one aspect the sacrificial valve comprises a thin film structure. This may be provided as a single layer of a dissolvable film. The dissolvable film may be provided as an aqueous polymer matrix comprising one or more of various cellulose derivatives, hydrocolloids, acrylate copolymers, gums, polysaccharides, plasticizers or the like.

In certain configurations a multi-layer functional film configuration may be utilised to fabricate a valve. Such a multi-layer construct may incorporate individual layers with different properties. For example a first layer may be hydrophobic whereas a second layer is hydrophilic. It will be appreciated that the hydrophobic layer may resist dissolution by water and as such will retain the integrity of the valve despite passage of an aqueous solution passed the valve. Once it is exposed, for example to an organic solvent, it may dissolve by the nature of a second layer provided below that first layer which is resistant to the organic solvent will prevent the complete opening of the valve. In this way individual layers of the valve may be dissolved dependent on the nature of the solvent in the liquid passing the valve. The timing of the opening of the valve may then be controlled by judiciously selecting a valve whose individual layers match the sequence of fluid flows desired for a particular assay.

Such a multi-layer construct may comprise a first layer comprising a pressure sensitive adhesives film (PSA films) and a second layer of a dissolvable film which may be adhered to or otherwise provided on the PSA. To fabricate, the PSA film may be provided as a single sheet which is outlined with through holes cut using a cutter-plotter machine. The secondary layer consisting of a specialized dissolvable film may then be pressed on the PSA. These tabs are then cut from the complete assembly.

Embedding the assembly within the channel of the microfluidic device creates the valves; the tacky nature of the PSAs allows for closing off microchannels by simply sticking the assembly into the system features. Once prepared, the valves remain isolated; the valve is essentially in a "closed state" until liquids come into contact with the dissolvable film surface. Once liquids are pumped to the interface, after a determined period of time the film liquefies and the valve is in an "open state", further pumping will propel liquids through the valve site.

The use of the hybrid films for valving has applications for a range of microfluidic designs including both stationary and centrifugal arrangements. Particularly, centrifugal based systems are notably improved by dissolvable-film based valving; for example mixing, blood separation, metering, aliquoting, phase separation, dilution, on-board liquid storage, etc.

By providing a valve comprising dissolvable films to form efficient barriers for liquid flow; until the films are in direct contact with liquid reagents the fluidic seals between regions of the device are fully maintained. No separate actuation of the valve is required as the same pumping mechanism driving the flow also actuates the valve. The sacrificial valves described here are of particular interest for a range of applications; for example as programmable flow control elements and as vapour barriers for on-board liquid reagent storage.

Use of such a valving arrangement is particularly advantageous for stop-go liquid-based assay devices which use a plurality of liquids in a predetermined sequence of steps to achieve a particular analysis. Such a solvent based routing arrangement may be used in a variety of applications. For example use of such valves provides for a redirection and separation of consecutive aqueous, organic and/or mix flows. In one arrangement this may be used to facilitate nucleotide purification (total RNA) from whole blood using a centrifugal microfluidic platform, on which the two valving systems are integrated

In another configuration the present teaching provides a valving arrangement which is configured to provide a combined metering and aliquoting of a liquid from a metering chamber to a sample chamber. Desirably the metering chamber is provided immediately upstream of a valve provided in a fluid sample channel.

The fluid sample channel may be provided as a branch off a fluid channel. In this way a liquid passing in the fluid channel will collect in the metering chamber and will be retained therein until such time as the valve is opened. The dimensions of the metering chamber will define the ultimate volume of liquid that is subsequently aliquoted from the metering chamber to the sample chamber.

In one arrangement this configuration of the present teaching provides a valving arrangement which may incorporate a cellulose/ paper-based or membrane-based metering structure for use on a centrifugal microfluidic lab-on-a-disc platform. On presenting a valve in an initially closed configuration a finite volume of liquid may be allowed collect in a metering chamber upstream of the valve. Opening the valve allows the flow of this metered volume to a sample or mixing chamber located downstream.

By using a membrane, such as paper or a hydrophobic membrane which absorbs and holds back the liquid up to a certain pressure barrier, to provide the valve it is possible to use the properties of the membrane to determine the time of opening of the valve. For example, by increasing the spinning rate the disk is subjected to, the liquid can be forced through the paper/membrane and into a mixing chamber. In this way the hydrophobic membrane can be usefully employed to increase the hydrophobicity of a rupturable valve.

In one arrangement the metering chamber is located closer to the axis of rotation of the disc than the mixing chamber such that when the valve is opened the rotation of the disc induces a fluid flow from the metering chamber to the mixing chamber.

Desirably the device is provided as a multi-layer microfluidic device comprising first and second fluid channels provided in different layers of the device. The fluid channels are configured relative to one another to provide a combined metering and aliquoting arrangement such that a first and second metered sample provided from each of the first and second fluid channels may be directed to a common mixing chamber for use in an assay.

By using a network of microchannels and these structures, it is possible to mix liquids in a combinatorial fashion. This ability to array M*N fluid elements has major applications in areas such as DNA genotyping. In this applications the steps load fluids into the inlet chambers (M+N pipetting steps) results in M*N combinatorial preparations where in conventional liquid handling methods M*N*2 pipetting steps would be required.

If used with a single DNA sample this approach also has great potential in the field of dPCR.

These and other features will be better understood with reference to the following exemplary arrangements which are provided to assist in an understanding of the present teaching and in no way should be construed as limiting the scope to the specific examples which follow.

### Brief Description of the Drawings

The present application will now be described with reference to the accompanying drawings in which:
Figure 1A is a schematic showing in exploded view a sacrificial valve provided in accordance with the present teaching;
Figure 1B is a schematic showing how contact of a fluid with the valve of Figure 1A causes a sacrificial layer of the valve to dissolve allowing fluid communication between a first and second side of the valve;
Figure 1C shows how a combination valve may be formed in accordance with the present teaching;
Figure 1D shows a valving arrangement whereby the wicking of a fluid through an imbibition membrane such as paper or cellulose media dissolves a dissolvable film;
Figure 2A is a schematic showing a valving arrangement provided in accordance with the present teaching whereby opening of a first release valve is effected by actuation of an actuation member in fluid communication with the release valve;
Figure 2B shows how such an arrangement can be used in a fluid network to provide an OR valving arrangement;
Figure 2C shows how such an arrangement can be used in a fluid network to provide a parallel release valving arrangement;
Figure 2D shows how such an arrangement can be used in a fluid network to provide an alternative parallel release valving arrangement;
Figure 2E shows how such an arrangement can be used in a fluid network to provide an AND valving arrangement;
Figure 3 shows in schematic form an example of how a network of valves may be provided within a microfluidic system in accordance with the present teaching;
Figure 4 shows how through a sequence of timed valve openings passage of a fluid may be controlled through a fluid path;
Figure 5A shows an arrangement activated by use of an ancillary fluid;
Figure 5B shows an arrangement whereby the ancillary fluid is provided in a second layer of the device so as to provide an opening of the actuation member from that second layer;
Figure 6 shows how, through a sequence of timed valve openings, passage of a fluid may be controlled through a fluid path incorporating a valve arrangement such as described in Figure 5;
Figure 7 shows how a flow barrier may be provided between a first and second valve;
Figure 8 shows how through a sequence of timed valve openings passage of a fluid may be controlled through a fluid path such as described in Figure 7;
Figure 9 shows alternative examples of valve operations that may be utilised within the context of the present teaching;
Figure 10 shows various examples of a system of cascading valves in accordance with the present teaching;
Figure 11A shows an example of an arrangement configured to provide an increased pressure source within a microfluidic network;
Figure 11B shows how a diffusion time delay may be provided in accordance with the present teaching;
Figure 12A shows an example of a multilayer microfluidic network in accordance with the present teaching;
Figure 12B show an example, in plan view, of a microfluidic network on a rotatable disc;
Figure 12C is another example, in plan view, of a microfluidic network on a rotatable disc;
Figure 12D shows an example of how the present teaching may provide routing of different fluids;
Figure 13 shows an example of a microfluidic network incorporating a absorptive material;
Figure 14 shows an example of a microfluidic network incorporating a porous membrane or cellulose film;
Figure 15A shows an example, in plan view, of a microfluidic network on a rotatable disc providing M*N fluid networking;
Figure 15B shows another example of a spiral based microfluidic network;
Figure 15C shows a fluid networking arrangement which uses capillary burst valves and metering;
Figure 16 shows a typical configuration of a solvent based routing mechanism for RNA extraction;

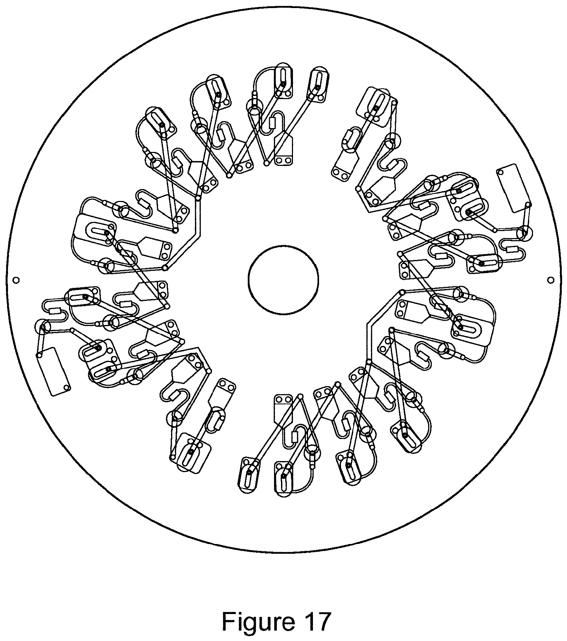

Figure 17 is an example of an integrated fluidic network including the following network functions: sequential release (similar to Figure 2A), parallel actuation type 1 similar to Figure 2C), parallel actuation type 2 (similar to Figure 2D), AND condition actuation similar to Figure 2E, co-located control/release valves (similar to Figure 5B).
Figure 18 is an example of a microwell plate configuration provided in accordance with the present teaching.
Figure 19 is an example of a valving arrangement that uses pulse control of rotation of the disc to selectively actuate individual valves.

### Detailed Description of the Drawings

The present teaching will now be described with reference to a microfluidic device and particularly to centrifugal systems comprising a microfluidic device provided with different valving arrangements to control the flow of liquid within the device. It will be appreciated that these arrangements are provided purely to assist in an understanding of the present teaching and should not be construed as limiting in any fashion. Where one or more elements are described with reference to one or more figures it will be appreciated that such elements may be replaced or interchanged with other elements without departing from the present teaching.

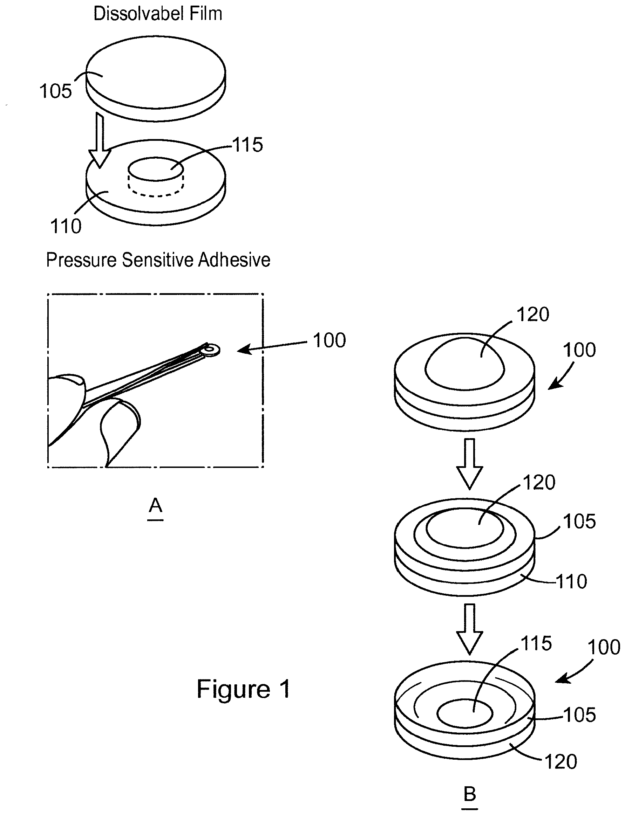

Figures 1A and 1B shows an exemplary construct of a sacrificial valve 100 provided in accordance with the present teaching. Such a valve was described in our earlier application WO2012164086, the content of which is incorporated herein by way of reference. As was described in that application such a sacrificial valve comprises a sacrificial layer 105 - desirably one that is dissolvable on contact with a liquid- the layer 105 typically being provided in the form of a thin film. The film is desirably of the type that prior to contact with a film will provide a barrier and once a liquid is introduced to the surface, the film will begin to dissolve, and a liquid can then pass through an aperture that was previously blocked by the film. In this way the film or membrane requires actual contact with a liquid to cause it to dissolve and allow a fluid pass through the valve. The time delay between contact with a liquid and disintegration of the film may be controlled depending on the physical construct or makeup of the film and judicious selection of appropriate films can therefore be used to selectively control the time at which liquids can continue throughout a device comprising such a valve subsequent to initial contact with the valve.

The films are typically derived from an aqueous polymer matrix consisting of various cellulose derivatives, hydrocolloids, acrylate copolymers, gums, polysaccharides, plasticizers, etc., and the rate of dissolution depends on the mixture, a range of film dissolution times can be created and utilized.

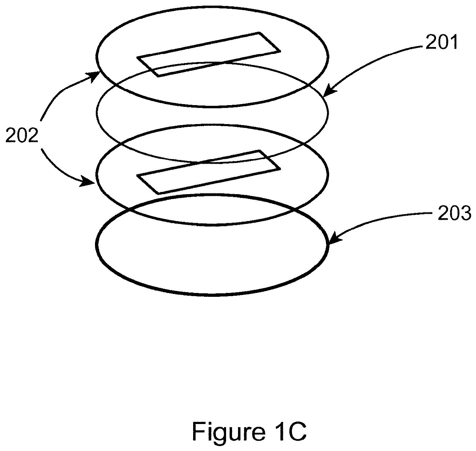

Figure 1C describes a modification to this dissolvable film valve. In this configuration a combination valve is provided which includes elements of a dissolvable film valve- such as described above- but in this configuration comprises one or more additional layers. In the exemplary arrangement of Figure 1C, the valve comprises five layers: one adhesive layer 101, a water dissolvable film 102, another adhesive layer 101, a hydrophobic membrane 103, and a second adhesive layer 101. At the top of the stack lies a pressure sensitive adhesive (PSA) 102 film, that immobilizes the stack and prevents leaking.

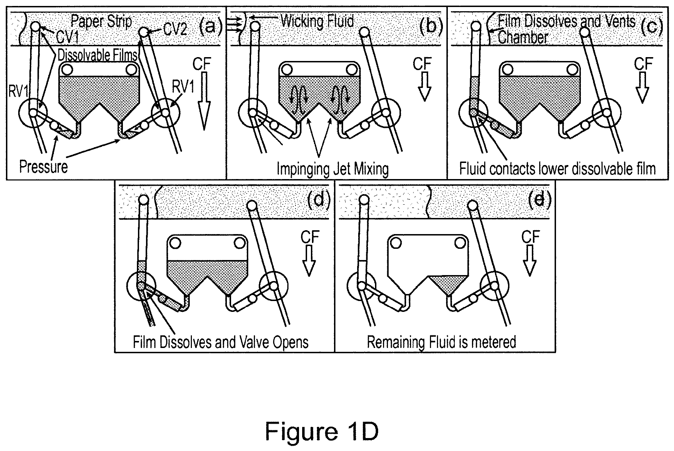

To fabricate such a multi-layer assembly, the PSA film may be provided as a single sheet which is outlined with through holes 115 cut using for example a cutter-plotter machine. The first layer consisting of the specialized dissolvable film may then be pressed on the PSA, as shown in Figure 1. The combined assembly forms a tab which may then be cut from the complete sheet of multiple such tabs.

Figure 1B shows how contact of a liquid 120 with the dissolvable layer 105 causes the layer to disintegrate thereby allowing the liquid to pass through the valve structure. In effect, prior to disintegration, the sacrificial layer 105 of the valve 100 provides a barrier to the through hole 115 that is formed in the PSA layer.

It will be appreciated that while it is desirable to form the second layer with some adhesive to allow for securing the valve within the channel, that other arrangements may dispense with the integral adhesive properties of the second layer and rely simply on its template or support functionality.

In another configuration, shown in Figure 1D, the present teaching may provide a valving arrangement whereby the wicking of a fluid through an imbibition membrane such as paper or cellulose media dissolves a dissolvable film. This may be used to cause a pneumatic chamber to vent and release of liquid (e.g. reagent liquid) from a reservoir and into a waste chamber without the reagent fluid coming in contact with wicking fluid/paper strip. This permits the sequence and timing of opening of these valves to be controlled through the wicking of fluid through the paper. It will be appreciated that such a structure is highly flexible and highly suitable to a wide variety of biomedical assays where sequential release of reagents is desirable.

Such a wicking arrangement may be used as part of a combination valve such as that described above with reference to Figure 1C. By using a wicking arrangement it is possible to delay the dissolving of the dissolvable membrane as the cellulose layer serves to delay the actual contact of the liquid with the layer which dissolves in that liquid.

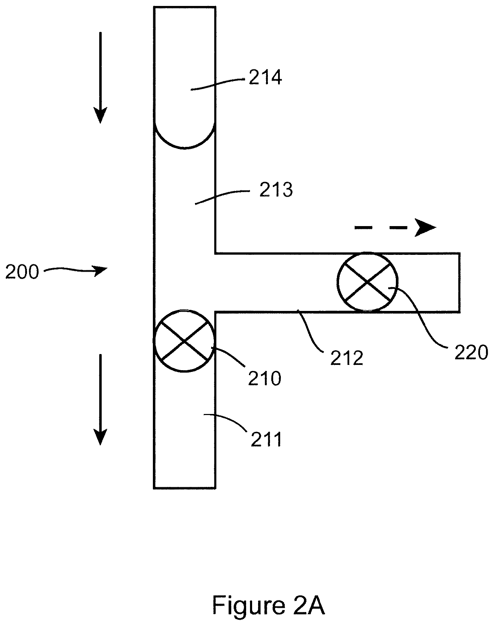

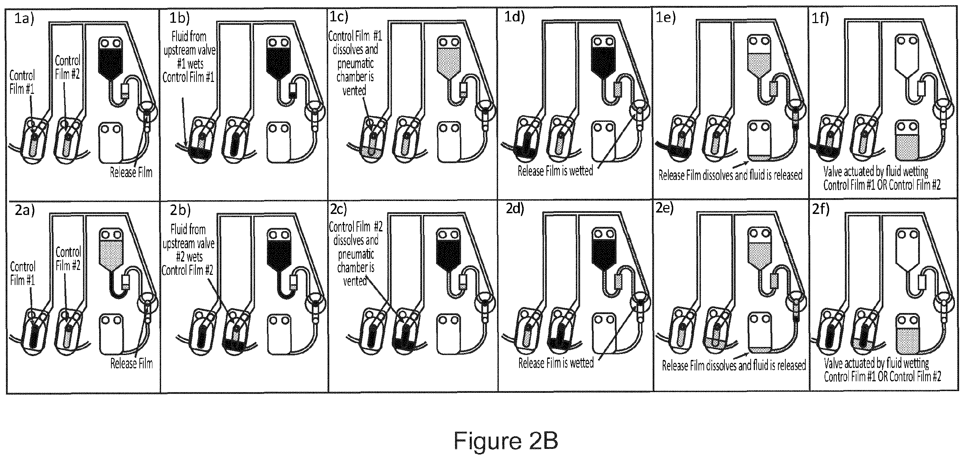

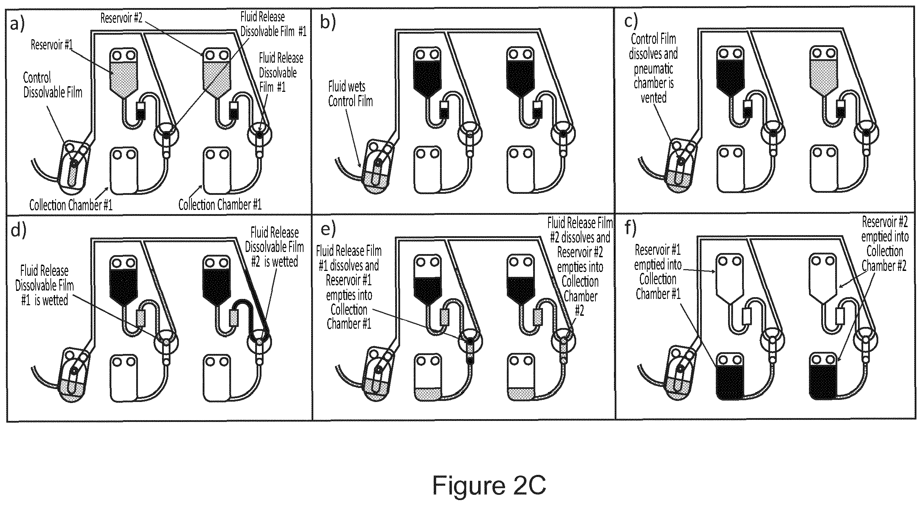

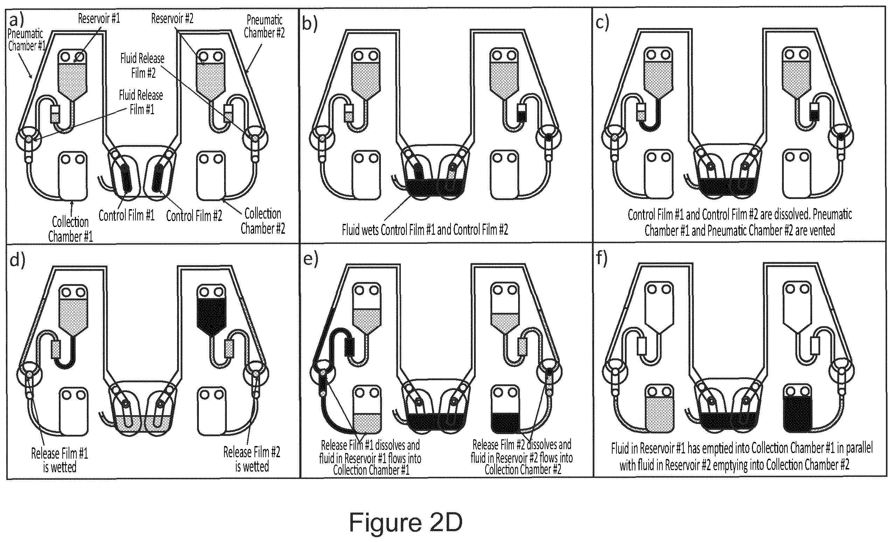

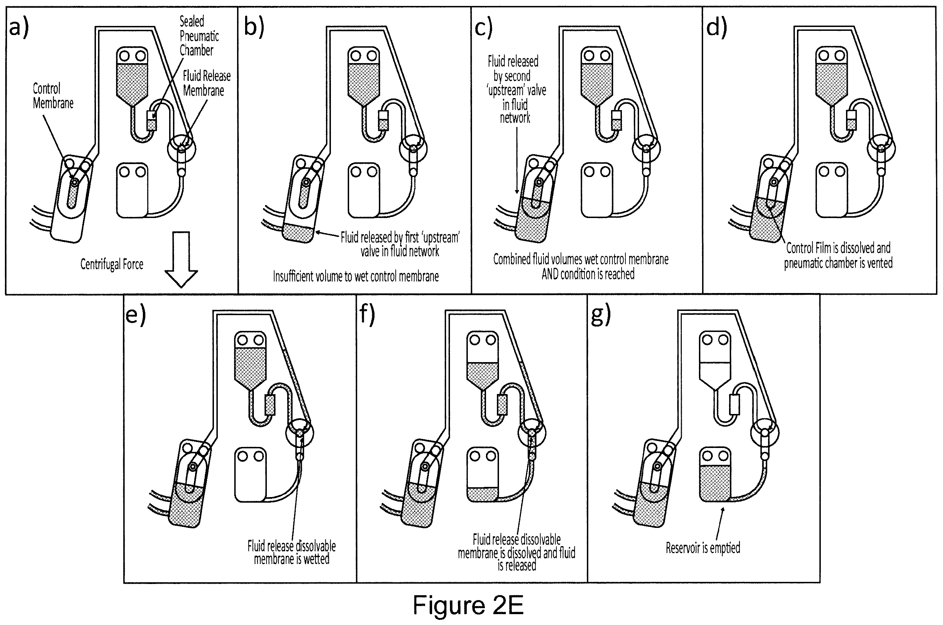

As shown in Figure 2A such valves may be used in a microfluidic device which uses the venting of a pneumatic chamber to allow a liquid progress and come into contact with a dissolvable membrane and effect an opening of a valve. Figure 2 shows such an example of a portion of a microfluidic device 200 comprising a first valve 210 in fluid communication with an actuation member 220, which may be provided by a second valve. Each of the first and second valves is located in a fluid channel 211, 212. The first fluid channel 211 provides a fluid spacer 213 provided upstream of the first valve 210. The fluid spacer in this configuration may be provided by a gas pocket and it serves to separate a dissolvable membrane of the first valve 210 from a liquid 214.

Actuation of the actuation member 220 causes a retraction of the fluid spacer 213 by allowing a venting of the fluid (in this example a gas) through the now open actuation member 220 and away from the first valve 210. As the volume of the fluid spacer was preventing the liquid contacting the valve 210, a retraction of the spacer allows the liquid 214 to come into contact with the dissolvable membrane which effects an opening of the first valve. In this way actuation of the first valve is controlled by actuation of the actuation member which is in fluid communication with the first valve.

It will be appreciated that the first valve may be fabricated in any one of a number of different ways such as those described with reference to Figure 1 above. In instances where the actuation member is a second valve of the system, the second valve may also comprise a dissolvable membrane which selectively dissolves on contact with a predetermined liquid.

By providing a first valve in fluid communication with an actuation member and configured relative to one another such that actuation of the actuation member effects an opening of the first valve, the present teaching provides a sequential opening of individual fluid channels within the microfluidic device and the selective control of the flow of a liquid within the microfluidic device.

Desirably this opening of a first valve is effected without any additional third party or external stimulus. In this way a passive control of sequential valve operation is achieved; the actuation of the actuation member serving to trigger the subsequent opening of additional valves within a microfluidic network.

In the context of fluid networking it is possible to provide multiple valves in fluid communication with one another to provide a variety of AND/OR relationships. Effectively, a liquid released from activation of one valve can act as activation fluid for effecting opening of a second valve. This cascading behaviour can allow the valves to be networked in a manner such that the valves can be triggered in a defined sequence. This can be particularly useful for bio-analytical methods such as immunoassays where sample and reagent wash steps are conducted in defined sequences. Along with reagent storage, the valves can also be integrated into structures representing laboratory unit operations such as metering, mixing and decanting.

In addition to sequential release of fluid, more complex relationships can also be implemented. For example, should a device be configured with two or more control valves and one release valve, the release valve can be actuated by activation of one of the control valves, thus resulting an OR relationship- an example of which is shown in Figure 2B. Similarly, parallel and almost simultaneous release of liquid from two or more reservoirs can be effected by implementing a valve configured with one control valve and two or more release valves using an arrangement such as that shown in Figure 2C or 2D.

Network relationship can also be implemented by defining the location of the control valves in fluid reservoirs. Parallel and almost simultaneous triggering of two valves can be achieved by positioning the two control valves so that they can each be triggered to open at the same time Similarly, an AND relationship can be implemented by locating a control valve relative to two or more valves provided upstream of the control valve, activation of the control valve requiring activation of each of the two or more upstream valves- an example of which is shown in Figure 2E.

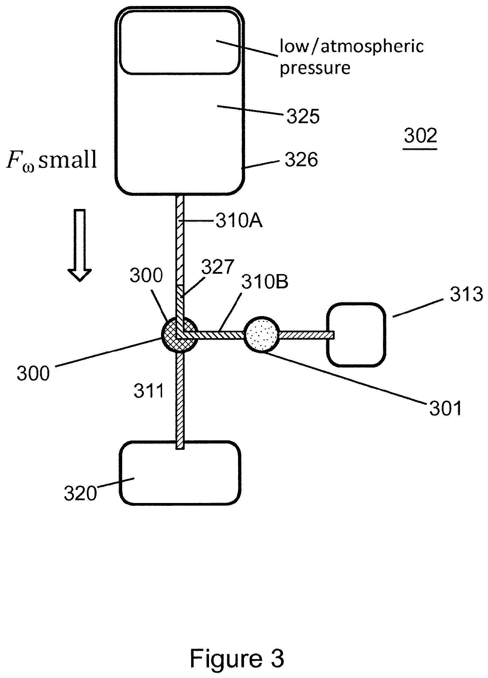

Figure 3 shows how a series of cascading valves, in this example two valves 300, 301, may be implemented in accordance with the present teaching. The valves 300, 301 are provided as part of a microfluidic device 302 which is incorporated on a rotatable substrate- not shown- which may be coupled to drive means which provide centrifugally induced artificial gravity conditions. The first valve 300 corresponds to the first valve 210 of Figure 2 whereas the 2nd valve 301 corresponds with the actuation member 220 of Figure 2.

The first valve 300 is provided within a channel 305 and serves to seal the channel when closed. The location of the valve defines an upstream 310 and a downstream 311 part of the channel; upstream and downstream being defined relative to the location of the valve within the channel 305. In this exemplary arrangement the upstream part of the channel comprises first 310a and second 310b branches.

The first valve is desirably provided as a gas tight, liquid dissolvable film such as described above with reference to Figures 1 and 2 and may be considered a sacrificial valve. This valve 300 is connected to an outflow or receiving chamber 320. This may also be referred to as a release valve or outlet valve.

The second valve 301 which serves as the actuation member is also provided initially as a gas-tight barrier and may be considered the control valve. In this example this second valve also comprises a sacrificial membrane which dissolves on contact with a liquid but it will be appreciated that this type of sacrificial valve is not necessary for the control valve. Other actuation techniques could also be employed-for example the valve could simply rupture on increasing the pressure applied to the valve.

When both valves 300, 301 are closed a gas pocket 327 is provided immediately upstream from the first valve 300 and prevents liquid 325 from a fluid reservoir 326 coming into contact with the sacrificial membrane of the first valve 300. The gas pocket 327 extends through the first and second branches 310A, 310B and as such is in intimate contact with each of the first and second valves.

In the absence of any change to the valve configuration the gas pocket remains *in situ* preventing liquid 326 coming into contact with the valve 300 and dissolving the sacrificial membrane.

In this configuration with the sealed or closed valves the liquid, termed in this example working liquid, cannot reach and thus dissolve and open the release valve 300 due to the counteracting pressure of the gas volume forming the fluid spacer. The working liquid cannot reach the release valve 300 through the presence of the pressurized gas in the gas pocket 327.

By opening the control valve 301, a vent 312 to a large, unpressurized reservoir 313 or atmosphere is generated. The opening of the control valve 301 thereby changes the dynamic of the previous equilibrium between the fluid spacer and the liquid 326. Without changing any other variables in the system, this venting removes the counteracting force that was previously serving to prevent the working fluid progressing forwardly towards the valve 300 and actually allows the working fluid to reach the release valve 300.

As was described above with reference to Figures 1 and 2, when the working fluid comes in contact with the release valve the liquid serves to dissolve the sacrificial membrane of the valve and opens a path for the working fluid into another micro-channel 311 where it then passes to a receiving chamber 320.

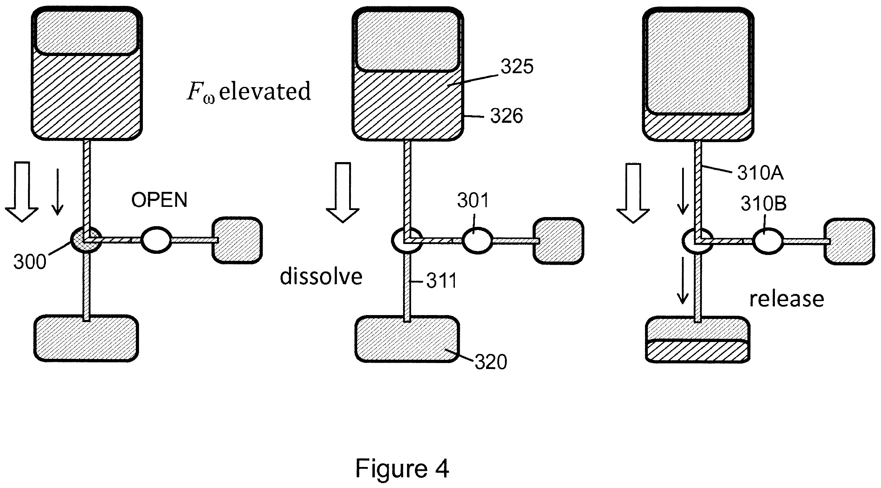

This sequence of activation of the second 301 and then first 300 valves is shown in the schematics of Figure 4. While both valves 300, 301 are closed the liquid cannot reach the dissolvable release valve 300. The control valve 301 is opened, thus making a larger volume available to the entrapped gas. Therefore the gas pressure is reduced causing the fluid spacer to retract and allows the liquid to reach the (dissolvable) release valve 301 and hence dissolves it. A path for the fluid to enter the receiving chamber 320 is opened.

In this implementation, there are two time constants governing the opening of the release valve 300. The first one can be freely programmed by selecting when the control valve 301 is opened which serves to effect a movement of the fluid spacer away from the release valve 300 and allow the liquid come into contact with the release valve 300. This then serves to trigger the opening of the release valve 300 and any delay is determined by the time taken to allow the liquid 325 move into contact with the sacrificial membrane of the release valve 300 and the dissolution time of the valve itself. As was discussed above with regard to the use of cellulose based wicking effect, by incorporating cellulose or some other wicking material this time delay can be increased.

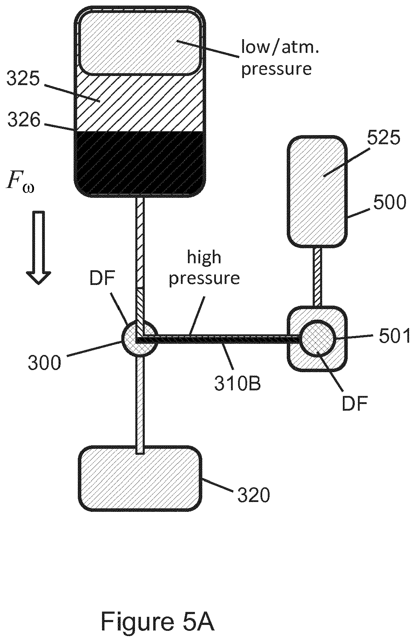

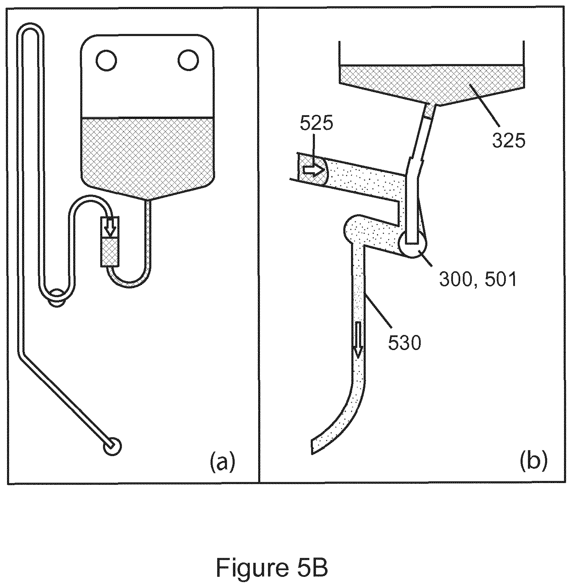

In the example of Figure 3 and 4 the control valve could be actuated by simply rupturing the valve through increasing the pressure applied to the valve 301 by increasing the rate of rotation of the microfluidic device. Figure 5A shows another example where the control valve also incorporates a sacrificial membrane 501. The same reference numerals will be used for similar components. This implementation may be considered an ancillary liquid activated valving mechanism. In this scenario an ancillary liquid 525 is provided in a chamber 500 in fluid communication with the control valve 501. When it is intended to open the control valve 501, the rotation of the microfluidic device causes the ancillary liquid 525 to come in contact with the control valve 301 and opens it (from the backside). This causes the entrapped gas volume in the channel 310B to expand (in the asymptotic case vented to atmosphere), thus allowing the liquid 325 to contact and dissolve the release valve 300. Figure 5B shows an alternative configuration whereby the control valve 501 and release valve 300 are co-located and the ancillary fluid 525 is can flow through a channel 530 provided in a second layer of the device. The sacrificial membrane of the control valve 501 is located so as to face that 2^{nd} layer 530 such that flow of the ancillary fluid 525 through the second channel 530 effects a dissolving of the membrane and subsequent opening of the release valve 300.

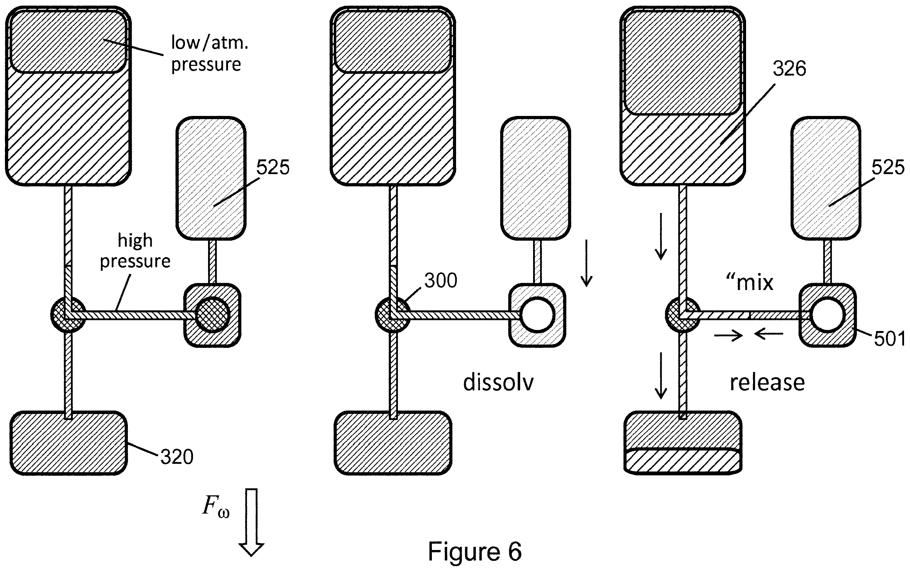

As shown in the process flow of Figure 6, once the control valve 501 is opened the ancillary liquid can also flow upstream through the control valve 501 where it may come into contact with the working fluid 325. This represents a potential downside in that the two liquids might mix and thus also a fraction of the ancillary liquid might flow into the receiving chamber 320. Of course there are various implementations where such a scenario of mixing fluids may be useful. While not shown in the simplified schematic of Figure 6, the mixing of two or more fluids could advantageously be provided by providing a receiving chamber 320 in fluid communication with a plurality of fluid paths provided upstream of the receiving chamber, each being selectively controlled by a control valve arrangement. In this way it is possible to sequentially or indeed concurrently introduce a plurality of liquids into the same receiving chamber 320 to provide one or more assay steps. Indeed the receiving chamber could also be provided in fluid communication with one or more fluid paths downstream of the receiving chamber 320 to allow the controlled release of a liquid (or mixture of liquids) within the receiving chamber to another mixing chamber downstream.

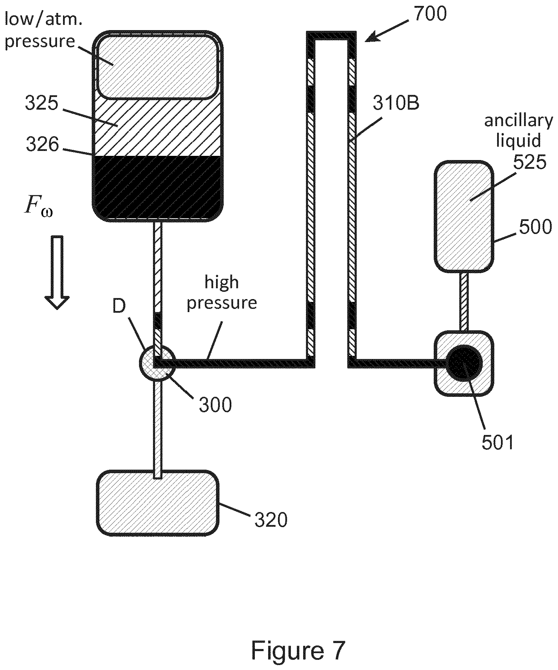

In the event that it is not desired to mix the ancillary liquid with the working fluid such that only the working fluid 325 will flow into the receiving chamber 320 it is possible to provide, in accordance with the present teaching, a flow barrier 700 between the first 300 and second 501 valves. Figure 7 shows such an example where the second branch 310B is configured to define a flow barrier between the two valves. This flow barrier prevents liquid to pass from one side to another. The barrier is arranged to allow an exchange of gases so as to equalise the pressure within any open micro-channel. In a simple implementation of a barrier the orientation of the second branch 310B is configured to define a tortuous path. An example of such a tortuous path is a siphon shape which extends radially inwards on a centrifugal disk. The pressure exerted by the liquid upstream of the branch 310B is not sufficient to overcome the necessary head pressure to travel around the siphon and mixing is prevented. In another potential embodiment the barrier is a membrane which is gas-permeable but impermeable to the working liquid.

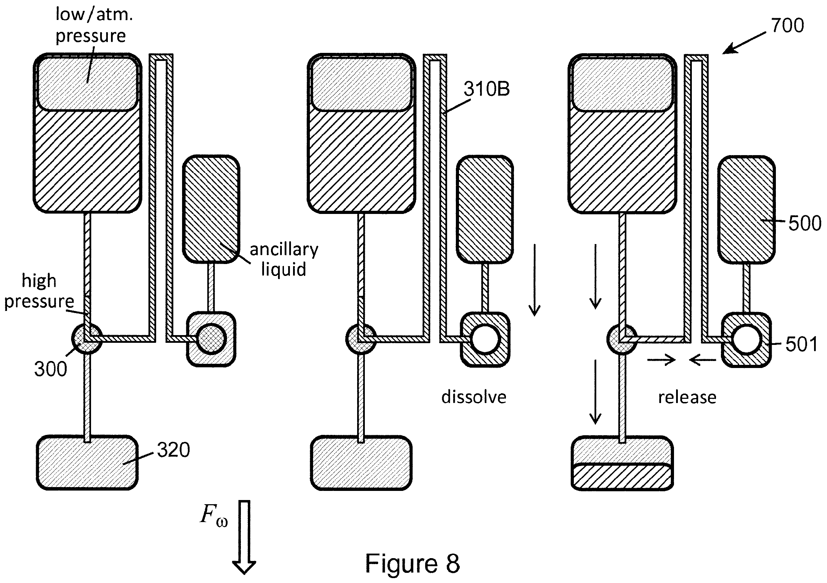

Figure 8 shows a sequence that will follow the opening of the control valve. The ancillary liquid comes in contact with the control valve. The control valve is dissolved which permits the working fluid to reach the release valve. The release valve is opened and opens a path for the fluid to the receiving chamber. The barrier 700 prevents the working liquid from exiting through the control valve or mixing with the ancillary liquid.

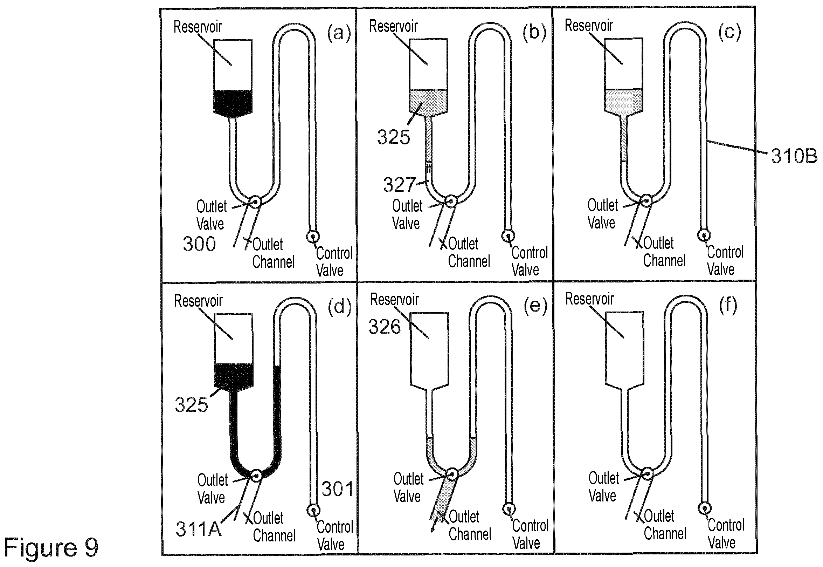

Figure 9 shows another schematic illustrating operation of a microfluidic device incorporating cascading valves in accordance with the present teaching. In Figure 9a fluid is loaded in reservoir 326. By rotating the microfluidic device centrifugal force are generated and as shown in Figure 9b, under the influence of this centrifugation, the fluid is compressed into the pneumatic chamber until equilibrium is reached. Below a certain threshold frequency, the gas will not be sufficiently compressed to allow the fluid to reach the sacrificial or release valve. Figure 9c illustrates the result of an opening of the control valve, either to atmosphere or a large reservoir. In Figure 9d, as the pneumatic chamber is now essentially open, the liquid can advance to contact the sacrificial release valve, shown in Figure 9e. The release valve dissolves and allows the fluid to drain through the outlet channel 311 and as shown in Figure 9f, the reservoir 326 is fully emptied through the outlet channel.

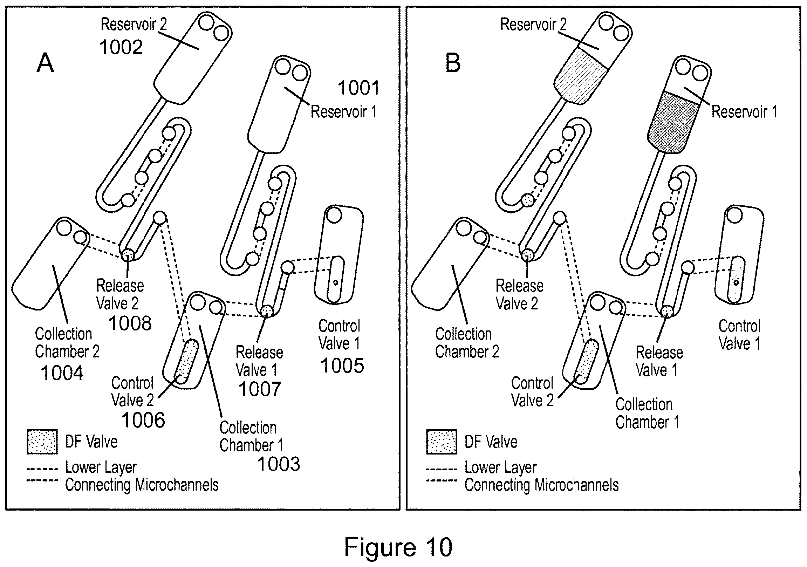

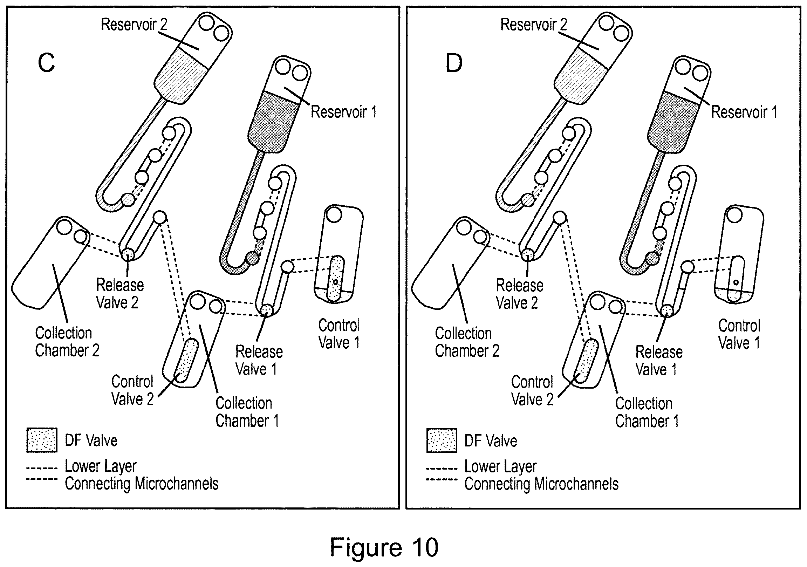

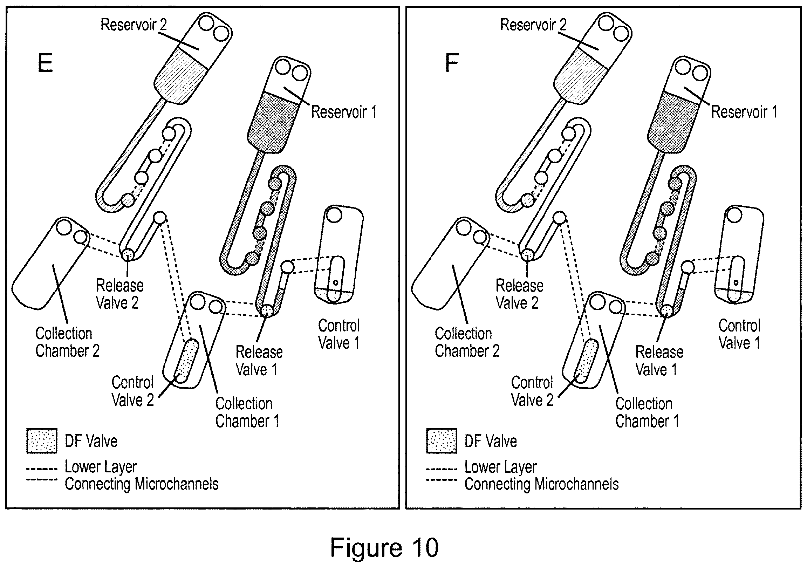

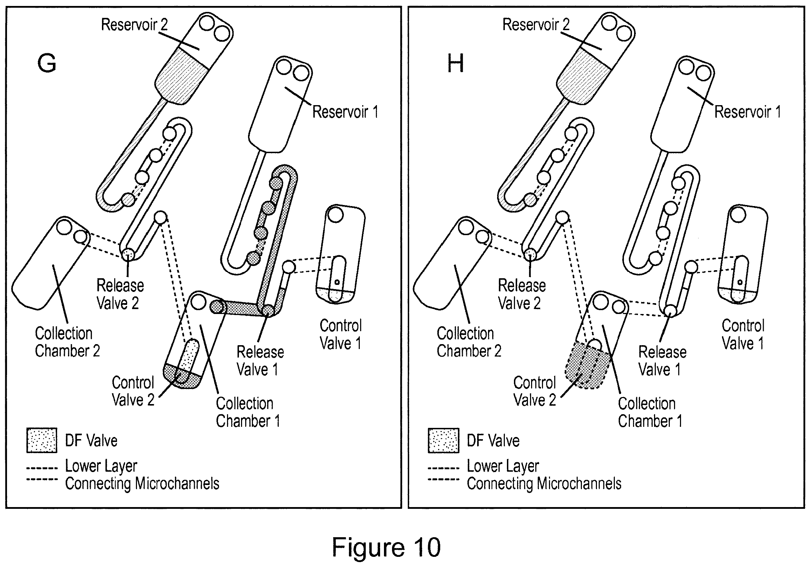

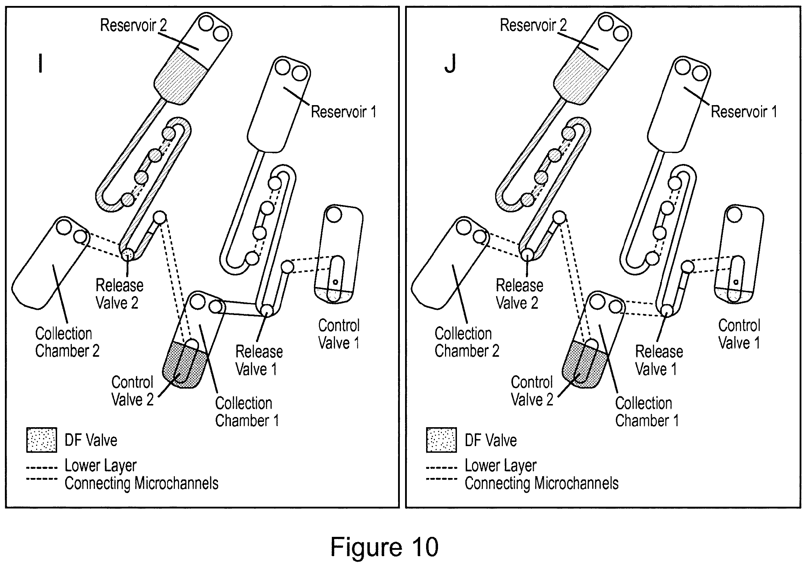

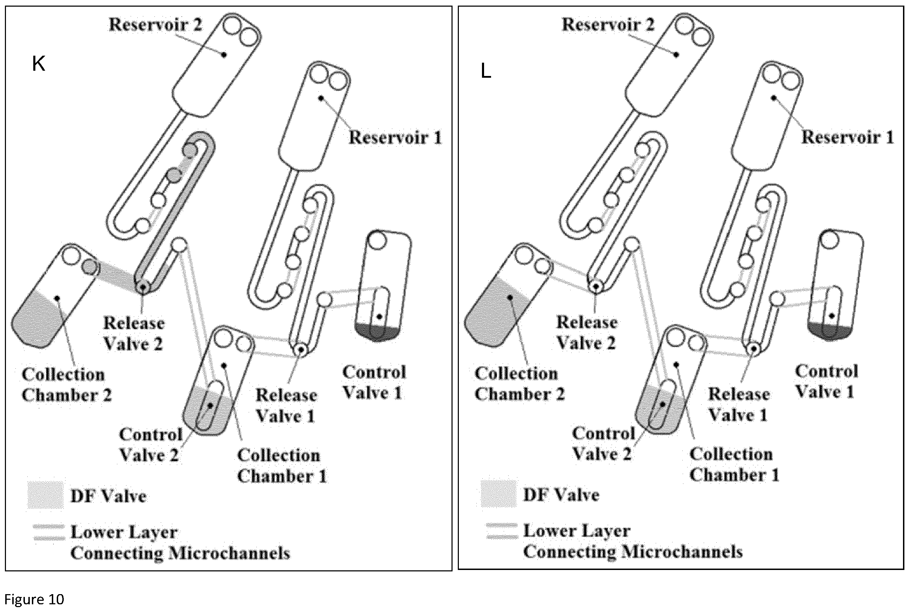

Figure 10 shows a system schematic of a how the previously described exemplary arrangement of two cascading valves may be extended to a system comprising more than two valves sequentially arranged to allow actuation of a first valve effect a triggering of a second valve to open. In Figure 10a, a microfluidic structure showing two reservoirs 1001, 1002 and two collection chambers 1003, 1004 each separated by valves 1005, 1006, 1007, 1008. In Figure 10b liquid is loaded into each of the two reservoirs 1001, 1002. In Figure 10c liquid is loaded into the chamber containing the first control valve 1005 and the disk is centrifuged. The centrifugal forces generated by this rotation causes the liquid in the first and second reservoirs 1001, 1002 to compress the gas in upstream of the release valves 1007, 1008 but not sufficiently to allow the liquid come into contact with and dissolve these release valves. In the arrangement of Figure 10d a first control valve 1005 is opened and as a result - shown in Figure 10e the liquid in the first reservoir 1001 is now free to flow into the (now open) pneumatic chamber and comes in contact with release (dissolvable film) valve 1007. In Figure 10f this release valve 1007 is shown open- resultant from a dissolving of the sacrificial membrane.

As shown in Figure 10g a liquid path to the first collection chamber 1003 is now open. The first collection chamber 1003 starts to fill. The second control valve 1006 can then be opened as shown in Figure 10h with the result show in Figure 10i that the liquid in the second reservoir 1002 has an open path and comes in contact with the second release valve 1008. The contact causes this valve 1008 to dissolve (Figure 10j) with the result that the liquid has a free path to enter the second collection chamber 1003 (Figure 10k). As shown in Figure 10i in the absence of any restriction in the fluid paths, the fluid will now drain completely into the second collection chamber 1004.

It will be appreciated that more complex devices than that described herein can be employed within the context of the present teaching.

For example devices comprising two or more valves may be provided with each of the valves having different operating characteristics. As the valve actuation of a specific valve may be judiciously related to a frequency of rotation of the device, it is possible in accordance with the present teaching to provide multiple valving arrangements with actuation of specific valves being controlled by the spin frequency of the disc / rotor. In this way frequency thresholds can be introduced, and one or more reagents stored within the device can be slated to enter the reaction at a later stage and can be held back even through vigorous, high-frequency rotation and acceleration of the device as a whole.

A valving system provided in accordance with the present teaching addresses many problems associated with providing point-of-care bio-assays in an on-chip implementation. There is a desire within the context of providing such devices for a system that will allow for a storage and sequential release of sample and liquid reagents (the equivalent of multiple pipetting steps at the benchtop). Typical implementations are cell-based assays, dilution series and immunoassay protocols. In a Lab-on-a-disc these assays are implemented based on valving techniques which can be divided into those actuated off disk - such as thermally activated phase-change valves - and those which are actuated by changing the centrifugal forces on the disk (by changing the velocity of rotation). Examples of the latter valves include burst valves, capillary siphons, pneumatic siphons and dissolvable film valves. In order to open these valves in the correct centrifugal force profile is required by implemented a predefined velocity profile. The limitations on the upper and lower velocity profiles can limit the number and location of valves. For example serial siphons - actuated through a decrease and then increase in disk RPM - can take up significant space on a disk. In accordance with the present teaching where a cascading of valves is provided, opening of a first valve triggers the opening of a second valve without any other changes in the system dynamic required. In this sequential/cascading release, once a cascade has started the next valves will be triggered without any change in disk RPM or external inputs. Therefore it will be appreciated that devices provided in accordance with this valving strategy represent an important enabling technology which permits the implementation of complex bio-assays on lab-on-a-disc platforms with greater ease and flexibility than other strategies.

The simple arrangement of first and second valves arranged in a cascade sequence can be expanded to more complex arrangements. For example a sequential release valve may be opened through fluid being absorbed and then transported from a location away from the sacrificial valve to a location near the sacrificial valve through use of an integrated absorbing material provided within the microfluidic network. This material could be one of a number of different types of material- for example it could be paper or another cellulose based material and could be affixed to the actual valve or alternatively provided in fluid communication with the valve. The material may be used to transport fluid to a reservoir near the valve and then allow a subsequent opening of the valve. In this way the absorptive material may be used to place a significant time delay between the wetting of the absorptive material and the opening of the valve through a dissolving of the sacrificial membrane.

A second principle that may be considered is a method whereby a sequential release valve is used to hold fluid (called pumping fluid) in a reservoir at a point on a disk. At a more radially outward position presence of fluid (working fluid) at a specific point causes a release of the pumping fluid. The pumping fluid flows radially outward due to centrifugal force and through displacement of the working fluid (or gas which subsequently displaces the working fluid) causes some part/all of the working fluid to be displaced significantly radially inward. In this way the microfluidic network will incorporate fluid paths that direct fluid flowing outwardly from an axis of rotation of the device-in accordance with the induced centrifugal force. At the same time fluid paths that direct fluid flowing contrary to that induced force may also be provided. This pumping fluid may be immiscible with the working fluid and/or have a greater density than the working fluid. A centripetal displacement of the fluid may be used to prime a siphon valve

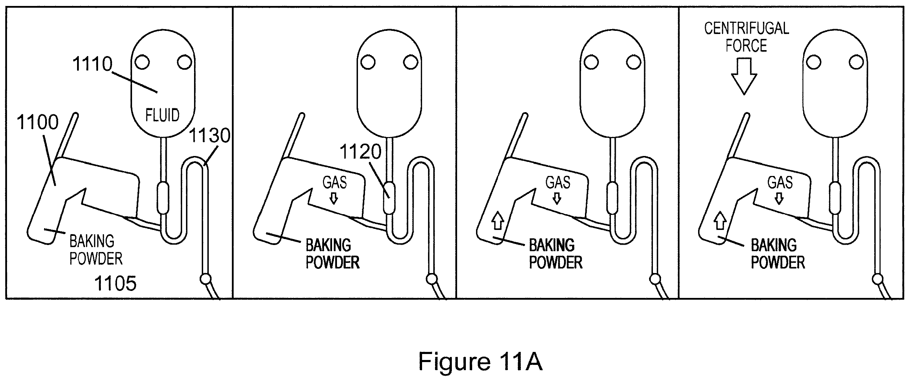

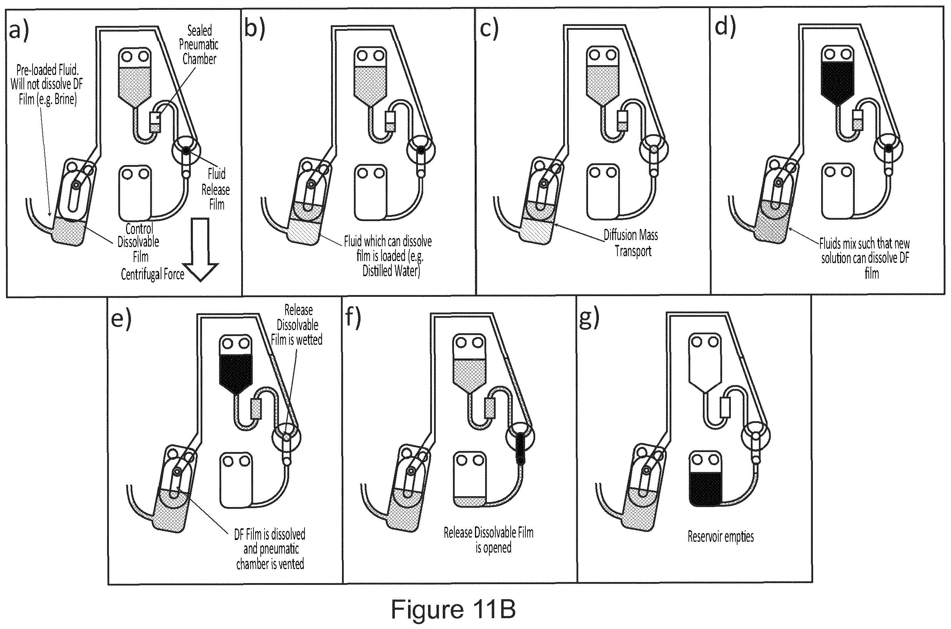

An example of how fluid paths that direct flow contrary to an induced centrifugal force is shown in Figure 11 which will be appreciated is a specific example of an general technique that can be provided in accordance with the present teaching. Figure 11 details four different panels, each showing the fluid location at different times. A reservoir 1100 is provided and used to retain a material/substance/apparatus 1105 which, when coming in contact with a fluid, results in an increase in the material/structures volume such that the net volume of the fluid/apparatus increases. In the example of Figure 11, the material is baking powder but other alternative materials such as for example non-oxidised metal particles, for example Boron could also be used. A liquid reservoir 1110 comprising a liquid 1115 is provided in fluid communication with the reservoir 1100 and also with first 1120 and second 1125 valves.

By selective activation of the first and second valves it is possible to allow liquid to flow from the liquid reservoir into the reservoir containing the baking powder. As shown in the second and third panels once the liquid 1115 makes contact with the baking powder a reaction results which then displaces increases the gas pressure in the reservoir 1100 causing the liquid 1115 to retreat back along the path within which it entered the reservoir 1100. This increase in volume of the gas within the reservoir 1100 can be used for a variety of purposes including:
To meter/transfer fluid into a second chamber;
Pump a significant portion of the fluid centripetally (radially inward);
Prime a siphon valve

While not shown in Figure 11, a series of chambers may be provided and arranged relative to one another such that different sources of fluid expansion may be provided which can then occur at different rates resulting in actuation of the valves/pumping processes in sequence. In such an arrangement it is possible to stagger the timing of the fluid coming in contact with the material/apparatus in order to stagger the activation of the valves (i.e. material located behind a dissolvable film).

The generated gas may be trapped behind a deformable membrane and used to displace a secondary fluid. The material chosen within the reservoir may determine the timing of the actuation of the valve and the actual volume of gas that may be generated with the resultant pressure increase. In one configuration, the volume of the reservoir 1105 is used to determine the timing of the actuation of the valve. In one configuration, actuation of the valve is triggered through increasing/decreasing the speed of the disk rotation such that fluid comes in contact with the material. It will be appreciated that all or none of these actuation techniques may be implemented together.

It will be appreciated that techniques implemented in accordance with the first principle are advantageous in that the ability to pump fluid inwardly from the edge of a lab-on-a-disk system is important for performing complex assays. This is because the real-estate on a disk is limited and a limited number of processes can be performed as the fluid moves from the inside to the outside of the disk. The approach described here is particularly useful as it can be triggered through the presence of the fluid at a specific point and in most implementations does not require any change in the disk rpm. In addition, applied to valving (instead of pumping) this can permits the auto-actuation of valves after specific times.

It will be understood that in accordance with the present teaching sacrificial valves may be initially provided within the microfluidic device having a gas pocket provided between the liquid and the valve. In the absence of an induced flow, the presence of the gas pocket defines a fluid barrier preventing liquid contact with the valve. The retention of a gas pocket is advantageously enabled within the context of the present teaching as the channels of the device are microfluidic in nature. As will be discussed in more detail below when employed on a rotatable substrate such that liquid movement is induced by a centrifugal force, while each valve will typically have an associated burst frequency above which the valve will burst, the present teaching does not require the frequency of rotation of the rotatable substrate to be increased to effect the opening of these valves. Rather than rely solely on rotation frequency to dictate opening of valves the present teaching provides an opening of a valve based on parameters related to both the time required to dissipate the gas pocket away from the sacrificial membrane and the dissolution rate of the membrane on contact with the liquid. This redaction of the fluid spacer provided by the gas pocket is not effected by increasing the rotation frequency of the rotatable substrate but rather by actuation of another actuation member in fluid communication with the sacrificial membrane valve.

It will be appreciated that the time required to dissipate the gas pocket will depend on the volume of gas in the gas pocket which is related to the dimensions of the channel housing said pocket. It will be understood that within the context of the present teaching that it is the micro-dimensions of the microfluidic device that allows the creation of a stable gas pocket in the first place. By suitably configuring the first region of the channel in the location upstream of the sacrificial membrane it is possible to ensure that once the device is primed a gas pocket will be formed between the sacrificial membrane and the advancing fluid within the first region. Effectively the introduction of a liquid into an entry port of the first region allows the liquid to advance within the first region. The advancing liquid migrates through the first region forcing gas forwardly of fluid. The gas will migrate towards the sacrificial membrane. The nature of the sacrificial membrane is such as to provide at least a time delay in gas migration through the membrane. In certain arrangements, the membrane will be gas impermeable preventing the passage of any gas through the fabric of the membrane. In other arrangements, the membrane will provide a flow resistance whereby gas may over time percolate through the fabric of the membrane. In both circumstances, the membrane retards or stops completely the progression of the gas past the valve so as to ultimately form the gas pocket between the sacrificial membrane and the advancing fluid within the first region.

The volume of the gas pocket will have an effect on the time duration that will ultimately be required to dissipate the gas away from the sacrificial membrane and allow liquid contact the membrane.

The principle in use by which the gas pocket dissipates may vary dependent on the configuration employed but in accordance with the present teaching in all circumstances is triggered by the actuation of a valve provided in fluid communication with the sacrificial valve. In a first configuration by suitably configuring the device the presence of the gas pocket between the liquid and the valve may be retained until such time as valve actuation is required. The time of actuation is dependent on the actuation time of the actuation member, the rate of breakdown of the gas pocket and the subsequent dissolving rate of the valve. It will be appreciated that such a configuration is particularly useful for on-board reagent storage. In such an application it is desirable that the sacrificial membrane is selected to have specific vapour resistant properties. The significance of this resistance will however depend on the specifics of the intended storage conditions.

By providing a valving arrangement in accordance with the present teaching it is possible to provide a liquid-gas interface within the device by the retained gas pocket and the liquid within the first region of the channel. It will be understood that this interface is effectively stable and will remain *in-situ* in the absence of an applied force to disrupt that stability. The stability is governed at least partially by the geometry and surface tension between the two adjacent fluid (liquid and gas) phases and is triggered by actuation of an actuation member, typically formed by a second valve, in fluid communication with the sacrificial valve. Typically the gas pocket is operably retained in place between the advancing fluid and the valve and will remain in place until such time as the pressure pressing the liquid plug against the gas pocket supersedes a certain critical value. By operably destabilizing the meniscus such as for example by providing elevated pumping pressures and reducing the pressure downstream of the valve it is possible to bring the fluid into contact with the valve, effectuate the wetting and following dissolution of the valve.

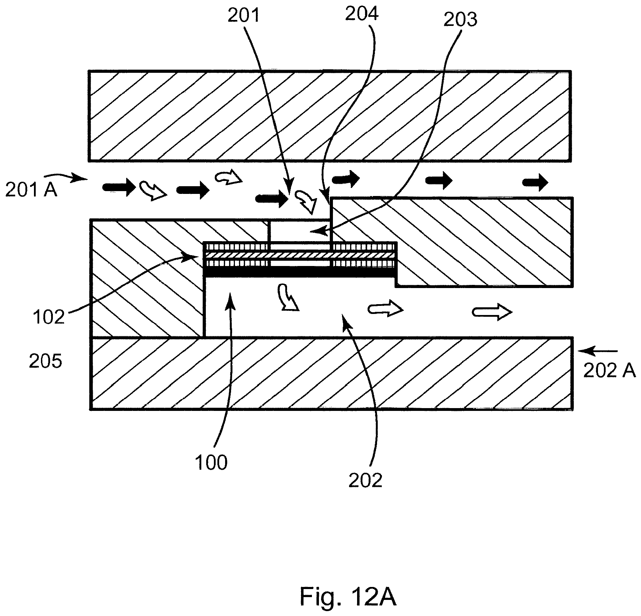

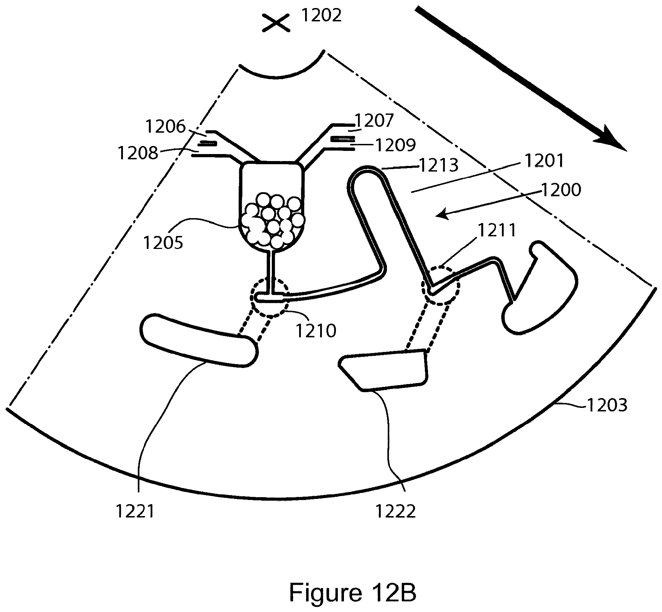

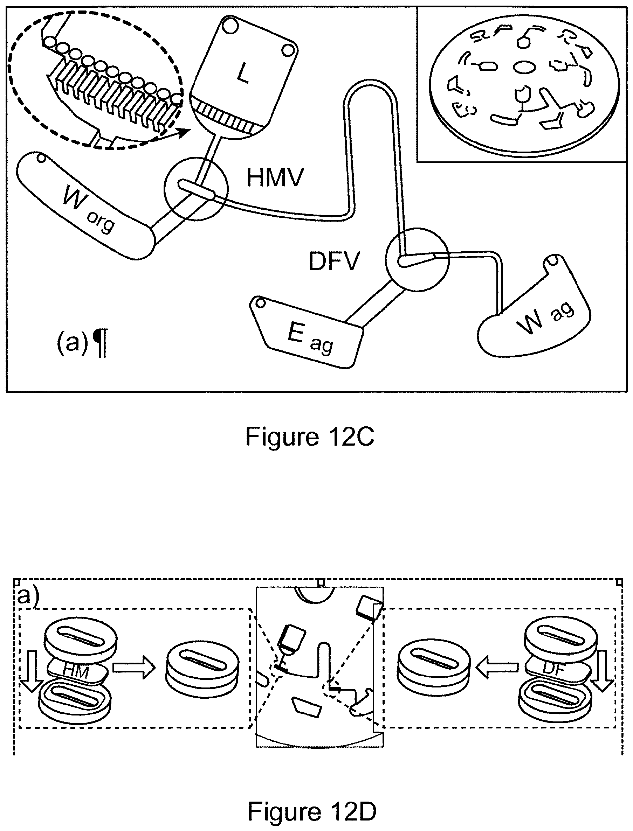

In another configuration provided in accordance with the present teaching, an example of which is shown in Figure 12, the present teaching provides a multilayer microfluidic device comprising first 201 and second 202 channels provided in first 201A and second 202A layers of the multilayer microfluidic device 205. Each of the first and second channels is in fluid communication with one another through a vertical through-hole 203. A sacrificial valve 100 is provided within or adjacent to the through-hole and in a normally closed configuration serves to prevent passage of a liquid through the through-hole. By selectively opening the sacrificial valve it is possible to allow the flow of a liquid from the first channel to the second channel. The first and second channels are desirably configured within the microfluidic device such that on opening the sacrificial valve, a liquid travelling in the first channel 201 will preferentially go through the through-hole 203 and into the second channel 202.

The sacrificial valve 100 is desirably of a type such as described above with reference to Figure 1C and comprises a sacrificial membrane 102 and is desirably configured to selectively dissolve dependent on the specifics of the liquid contacting the valve. By using a liquid specific membrane it is possible to sequentially flow different liquids passed the valve and the valve will only open when exposed to a specific liquid which targets the specific sacrificial membrane utilised. For example certain membranes may have hydrophobic properties which do not dissolve on exposure to an aqueous solution. Other membranes may be selected for the hydrophilic properties such that they will dissolve on contact with an aqueous solution.

As discussed above with reference to Figure 1C, in one aspect the sacrificial valve 100 comprises a thin film structure. This may be provided as a single layer of a dissolvable film. The dissolvable film may be provided as an aqueous polymer matrix comprising one or more of various cellulose derivatives, hydrocolloids, acrylate copolymers, gums, polysaccharides, plasticizers or the like.

In certain configurations a multi-layer functional film configuration may be utilised to fabricate a valve. Such a multi-layer contract may incorporate individual layers with different properties. For example a first layer may be hydrophobic whereas a second layer is hydrophilic. It will be appreciated that the hydrophobic layer may resist dissolution by water and as such will retain the integrity of the valve despite passage of an aqueous solution passed the valve. Once it is exposed for example to an organic solvent it may dissolve by the nature of a second layer provided below that first layer which is resistant to the organic solvent will prevent the complete opening of the valve. In this way individual layers of the valve may be dissolved dependent on the nature of the solvent in the liquid passing the valve. The timing of the opening of the valve may then be controlled by judiciously selecting a valve whose individual layers match the sequence of fluid flows desired for a particular assay.

Such a multi-layer construct may comprise a first layer comprising a pressure sensitive adhesives film (PSA films) 101 and a second layer of a dissolvable film 102 which may be adhered to or otherwise provided on the PSA. To fabricate, the PSA film may be provided as a single sheet which is outlined with through holes cut using a cutter-plotter machine. The secondary layer consisting of a specialized dissolvable film may then be pressed on the PSA. These tabs are then cut from the complete assembly.

Embedding the assembly within the channel of the microfluidic device creates the valves; the tacky nature of the PSAs allows for closing off microchannels by simply sticking the assembly into the system features. Once prepared, the valves remain isolated; the valve is essentially in a "closed state" until liquids come into contact with the dissolvable film surface. Once liquids are pumped to the interface, after a determined period of time the film liquefies and the valve is in an "open state", further pumping will propel liquids through the valve site.

The use of the hybrid films for valving has applications for a range of microfluidic designs including both stationary and centrifugal arrangements. Particularly, centrifugal based systems are notably improved by dissolvable-film based valving; for example mixing, blood separation, metering, aliquoting, phase separation, dilution, on-board liquid storage, etc.

By providing a valve comprising dissolvable films to form efficient barriers for liquid flow; until the films are in direct contact with liquid reagents the fluidic seals between regions of the device are fully maintained. No separate actuation of the valve is required as the same pumping mechanism driving the flow also actuates the valve. The sacrificial valves described here are of particular interest for a range of applications; for example as programmable flow control elements and as vapour barriers for on-board liquid reagent storage. For example in the schematic of Figure 12, a first fluid flow of an aqueous solution will have no effect on the integrity of the valve- the aqueous solution not effecting dissolving of the top layer of the valve. However by changing the solution to an organic solution such as IPA/EtOH it is possible to then effect a dissolving of the valve such that the liquid flow will pass through the through-hole 203 and into the second channel 202.

Use of such a valving arrangement is particularly advantageous for stop-go liquid-based assay devices which use a plurality of liquids in a predetermined sequence of steps to achieve a particular analysis. Such a solvent based routing arrangement may be used in a variety of applications. For example use of such valves provides for a redirection and separation of consecutive aqueous, organic and/or mix flows. In one arrangement this may be used to facilitate nucleotide purification (total RNA) from whole blood using a centrifugal microfluidic platform, on which the two valving systems are integrated

In a first configuration the valve 100 is located within a valve seat 204 and is connected through a channel 203 which has a cross-sectional area greater than the cross sectional area of the first 201 region.

As shown in Figure 12A, embedding the valve assembly within the channel of the microfluidic device creates a barrier between the two regions of the channel; the tacky nature of the PSAs allows for closing off of individual microchannels by simply sticking the tab that forms the valve assembly into the recess 204 that is formed within the microfluidic device to seat the valve. Once located, the through hole of the valve remains isolated; the valve is essentially in a "closed state" until liquids come into contact with the dissolvable film surface. Once liquids are pumped to the interface, after a determined period of time the film liquefies and the valve is in an "open state", further pumping will propel liquids through the valve site.

In operation, a fluid is provided in a first region of the channel 201 upstream of the valve 100, the valve providing a barrier to fluid flowing into the second channel. The microfluidic device may be coupled to a drive mechanism configured to induce fluid flow in the fluid which operably drives the fluid towards the valve. On contact of a specific fluid with the valve, the valve dissolves and the fluid may then pass from the first to the second region.

It will be appreciated that in accordance with this aspect of the present teaching a layering of hydrophobic membranes and dissolvable films within a multi-layered valve, provides a tuneable valve whereby the flow of a specific fluid type over the valve can be used to change the properties of the valve. For example of the layering is:
1. Membrane
2. Dissolvable film

Then an initially aqueous solution will flow over the valve primarily because the membrane is hydrophobic and only secondarily because there is gas trapped in the pockets (the ∼0.3µm pits in the track etch membrane). The second fluid to pass over - IPA - will wet the membrane and changes its surface properties. Due to the changed properties a third fluid - aqueous - will also wet the membrane and come in contact with the dissolvable film. This will result in the fluid dissolving the dissolvable film and routing through the fluid.

The valve may typically be provided below a step 204 to ensure that the valve 100 does not stand too high as this can deviate or block the flows to the lower channel 202. In this example of a combo-valve similar to that described with reference to Figure 1C, on the top side of the PSA layer 101 lies a hydrophobic (PTFE) 103 membrane. The membrane is covered with a second PSA layer 101 and a water soluble film 102 on the top of this stack.

Figure 12B shows an example of another complex analysis that may be achieved using cascading valves including at least one multi-layer valve in accordance with the present teaching, specifically a system configured to provide for solid phase nucleotide extraction on glass beads from cell homogenate and crude extract from whole blood. As shown in Figure 12B a microfluidic network 1200 of channels may be fabricated on a rotatable substrate 1201. The substrate has an axis of rotation 1202 and as will be appreciated by those of skill in the art, a rotation of the disc will causes fluid located proximal to the axis of rotation 1201 outwardly towards a perimeter 1203 of the substrate in a direction following the arrow.

In this example, a reservoir 1205 of glass beads is provided. The reservoir is coupled to four different fluid inlets: 1206, 1207, 1208, and 1209. These four inlets allow for the sequential introduction of an aqueous solution comprising RNA, IPA, EtOH and water through each of channels 1206, 1207, 1208, 1209 respectively.

A first valve 1210 is provided downstream of the reservoir 1205. This valve is desirably provided of the type described above as a combo-valve and shown in detail in Figure 1C. The combo-valve is provided in fluid communication with a second valve 1211 via a flow restrictor 1213- the flow restrictor is provided by a tortuous fluid path generating a siphon similarly to that described above with reference to Figure 7. The second valve 1211 desirably also comprises a sacrificial film.

Initially the two valves are provided in a closed configuration. The aqueous RNA solution is introduced through fluid path 1206 into the chamber 1205 with the glass beads. After being in contact with the acid-washed glass beads the aqueous phase is pressure driven over the combo-valve 1210- see Figure 1C for detail. The water in this fraction dissolves the first layer of the valve and stays on top of the PTFE membrane. Above a certain angular velocity the pressure exerted by the siphon 1213 against the flow of liquid is overcome by the centrifugal forces and the liquid flows into and comes into contact with the second valve 1211, thereby dissolving the soluble sacrificial membrane of this valve.

All consecutive organic phases- the IPA and EtOH, that are used for RNA precipitation and washing, are collected before the siphon 1213 as they pass through the hydrophobic membrane in to an organic waste chamber 1221. To strip the total RNA from the beads one final water rinse is passed through chamber 1205 from the fluid inlet 1209. In this fraction the total RNA is resuspended. It passes over the membrane of the Combo valve 1210 through the siphon 1213, and into the collection chamber 1222 because the second valve 1211 has been opened by the first aqueous containing phase and as result the liquid will preferentially follow this flow path. It will be appreciated that the second dissolvable film valve 1211 was opened by the initial aqueous phase. All consecutive flows are routed through the via hole opening, into the product (RNA) collection chamber 1223.

It will be appreciated that a configuration incorporating a vertical stacking arrangement whereby the sacrificial membrane is located in a plane substantially perpendicular to the direction of the induced centrifugal force facilitates manufacture of complex valve arrangements. Using such a stack arrangement it is possible to include other materials within the valve structure. Examples include functional membranes which may be integrated in the same way without significantly increasing the complexity of manufacture.

It will be appreciated that the destruction of dissolvable layer occurs at a frequency of rotation of the device- herein referred to as the burst frequency.

Such features are an improvement on the centrifugal platform as valving technologies that can withstand very vigorous hydrodynamic conditions enable processing (radially) above the valve while preserving downstream functionality. For instance the retention of the valves at such high-speeds shows potential for storing and withholding reagents throughout a series of spin protocols and opening on-demand at key operational times. This would be useful in such applications like clinical diagnostics where high-speed centrifugation is necessary for plasma separation from whole blood or vigorous mixing and homogenization steps. Valves retaining the regents/buffers required to analyse or process the components remaining in the supernatant, would be capable of holding until after the blood components are separated.

Microfluidic devices incorporating valves within the context of the present teaching are also useful for bioassays, e.g. immunoassays in clinical applications.

The mixing reservoir may be provided with a phase change material such as a material which is solid at room temperatures and becomes a fluid (lighter than water) at elevated temperatures. For example a suitable material is paraffin or a wax. By elevating the temperature of the disc while the disk is spinning it is possible to cause such materials to melt and thereby allow the fluid in the metering chambers to displace the fluids in the mixing reservoir and subsequently mix. Such an elevated temperature may be provided as part of a PCR/isothermal DNA amplification.

It will be appreciated that the use of the sacrificial layer valve represents a significant improvement on prior art efforts to provide mixing on a centrifugal platform as high-speed rotation can be performed without hindering other processes (as opposed to traditional passive valving techniques which can only withstand up to ∼1000 RPM).

In another embodiment not shown in the above figures, the dissolvable film technology could be used in blood separation. In this application, whole blood is introduced in a chamber on the disc. A valve provided within the context of the present teaching is placed at the end of an exit channel connected to the blood separation chamber. A "slowly dissolving" film layer, which takes minutes to liquefy, will be in contact with whole blood during centrifugal sedimentation (under high speed sedimentation the process takes about 3 min). The pure, separated plasma, which would have been in contact with the valve, liquefies and thus opens the valve. Further pumping will propel the pure plasma through the valve site for further processing on the disc.

Figure 12C shows a further arrangement provided in accordance with the present teaching. a) Schematic of the device showing the loading chamber (L), chamber 2 holds the organic waste **(W_{org}),** next chamber **(E_{aq})** collects of the eluted total RNA and chamber 4 retains the aqueous waste **(W_{aq}).** Also shown are the positions of a Hydrophobic Membrane Valve **(HMV)** and dissolvable film (DFV) valves. This arrangement is exemplary of how, in accordance with the present teaching it is possible by strategically placing various valve types in a designated microfluidic network, it is possible to provide a solvent-selective router capable of the sequential handling of multiple- in this example four- liquid aliquots. These aliquots were automatically collected on-disc in separate chambers. The device, illustrated in Figure 12C displays four distinct chambers: for loading of the solid phase and reagents (chamber L), for the aqueous waste (W_{aq}) in the first, for collecting the organic waste (W_{org}) in the second and third and for eluting the extracted RNA (E_{aq}) in the final step of the solid-phase extraction protocol. Within the loading chamber, a baffle with laser ablated radial grooves, 100µm wide, was provided to retain the beads in the presence of flow.

In order to collect the phases separately two solvent-specific valving schemes are used. The valves were assembled into a tab structure using two pieces of PSA - as was previously described with reference to Figure 1. The first was a Dissolvable Film Valve (DFV), which resists organic solvents, i.e. it would not dissolve during two of the four extraction steps, i.e. in the presence the IPA and EtOH. The second valve was a Hydrophobic Membrane Valve (HMV), which permitted the passage of the organic phase but remained impermeable to water. This single-use DFV opened once in contact with water whereas the HMV remained intact preventing water from passing through. In total, the router utilizes four valves (HMV, siphon valve, DFV and HM) with different functionalities. The Hydrophobic Membrane (HM) at the outlet of the aqueous waste, shown in Figure 12C, serves two roles; first, it acts as a selective barrier to prevent the solution from flowing out of chamber 4, and secondly it acts as a vent. The frequency actuated siphon valve permits the aqueous fraction to pass and to restrict the IPA and EtOH, minimizing the risk of contamination with organic solvents.

To reduce both the processing time and probability of contamination with external RNases during RNA sample preparation, solid phase extraction and purification with sequential loading of reagents and elution into designated reservoirs was integrated into the device. First, the crude aqueous extract from a homogenized biological sample (MCF7 cells) was introduced onto the beads inside the loading chamber (L). The RNA from the solution was retained on the acid-washed glass beads as a result of charge-charge interactions, as is known in the art. Using a specific spin frequency, the RNA depleted fraction was directed through a siphon valve into an aqueous waste chamber (W_{aq}). This flow actuated a normally closed DFV that opened a vertical channel and would deflect consecutive liquid flows, which pass the siphon crest, into the RNA elution chamber. Next, the disc was stopped and 2-propanol (IPA) was pipetted into the loading chamber to precipitate any remaining unbound RNA. At high rotational frequency (75 Hz) the IPA was driven through a hydrophobic valve into an organic waste chamber (W_{org}). Ethanol was consecutively loaded that rinsed away salts from the beads and precipitated nucleotides. Strategically positioned, the siphon restricted the flow of organic solvents before the liquids could reach its crest. Finally, 100 µL of aqueous buffer was introduced on-disc to elute the RNA from the beads. Using a predefined frequency of rotation drove the fluid above the HMV, over the siphon crest and through the open vertical channel into the RNA aqueous elution reservoir, E_{aq}. Thus, the solvent specific valves permitted a separate collection of the purified RNA containing a fraction from the aqueous and organic waste. It will be appreciated that this is an example of a stop-go assay that may be provided in accordance with the present teaching.

Figure 12D shows an example of how the present teaching may provide routing of different fluids. In this arrangement a simple, "inverse-Y" structure comprising a loading chamber connected *via* a bifurcation to two outlet chambers is provided. The 3-dimensional (3D) architecture of these multi-layer discs allows different channels to be provided in separate layers and be connected *via* a vertical through hole sealed using one of the solvent-selective valves; in this case a HMV. In absence of this HMV, *i.e.* in an open vertical *via,* the liquid would preferentially travel to the left collection chamber due to the lower flow resistance of this pathway. However, the HMV remained impermeable to aqueous solutions, thereby routing the flows to the right collection chamber. Alternatively, organic solutions could pass freely through the HMV and were hence routed to the left collection chamber. The selective barrier (DFV, HMV) that we introduced enabled a robust system that was not dependent on channel geometry during initial flow. Essentially, routing bound tightly to following the sequence of liquids and maintaining the pressure balance in an air pocket formed between the advancing and the stationary liquids.

The valve technology of the present teaching can also be used for implementing a dilution function. The valve is placed in a pneumatic chamber connected to the dilution chamber. After adding dilution buffer to the sample in the dilution chamber, the diluted sample is propelled into the pneumatic chamber where it liquefies and opens the valve. Further pumping thus propels the liquid through the valve site for further processing.

In another application using a value in accordance with the present teaching, the valve is used to carry out a complete assay on a centrifugal microfluidic platform. In this application, the valves are sequentially placed at different positions on the disc where it is first used for blood separation, then mixing of reagent buffer and plasma extracted from whole blood. The reagent buffer and plasma are allowed to incubate. After incubation, they are propelled to the optical detection region, where incubation with capture antibody and optical detection occurs.

In another application using a value in accordance with the present teaching, is its use for on-board liquid storage. In this application, the valve placed in a pneumatic chamber connected to the liquid storage chamber provides both liquid and vapour barrier to the stored liquid. The liquid is stored in this chamber for as long as necessary, e.g. during shelf life. When the liquid is to be used, the disc is spun at the burst frequency of the pneumatic chamber; this releases the liquid into the pneumatic chamber where it liquefies the valve membrane. Further pumping propels it through the valve site for further processing.

In another exemplary application usefully exemplifies the application of the present teaching to biological assays it is possible to provide a fully automated homogeneous, i.e. solution-phase nitrate / nitrite fluorometric assay entirely through a rotational frequency protocol.

It will be appreciated that the foregoing exemplifies applications of the present teaching whereby DF valves in accordance with the present teaching can be configured to yield at a geometrically well-defined burst frequency which can be tailored over a wide range of spin rates by the radial position of the valve on the disc, the volume of the entrapped air in the pneumatic compression chamber and the length of their inlet channel. Due to the broad range and sharp definition of burst frequencies, the present inventors have integrated and automated a comprehensive multi-step, assay protocol including the sequential release of 4 reagents by merely rotationally actuated dissolvable-film (DF) based centrifugo-pneumatic valving scheme. The exemplary application of detection of nitrate/nitrite starting at clinically relevant concentration in whole blood of donors shows results which are in good quantitative agreement with results obtained by running the assay on a regular well plate.

It will be appreciated therefore from the above that the use of the hybrid films in accordance with the present teaching for valving has applications for a range of microfluidic designs including both stationary and centrifugal arrangements. Particularly, centrifugal based systems are enhanced by dissolvable-film based valving; for example mixing, blood separation, metering, phase separation, dilution, on-board liquid storage, etc. The provision of a cascading valving network that effects an opening of such a valve by a trigger generated by the opening of a second valve within the network lends itself to a highly complex valving system within a microfluidic network without requiring additional external stimuli to effect opening of individual valves.

By providing a valve comprising dissolvable films to form efficient barriers for liquid flow; until the films are in direct contact with liquid reagents the seals between regions of the device are fully maintained. No separate actuation of the valve is required as the same pumping mechanism driving the flow also actuates the valve. The sacrificial valves described here are of particular interest for a range of applications; for example as programmable flow control elements and as vapour barriers for on-board liquid reagent storage. Within the context of the present teaching it will be appreciated that it is the direct contact of the liquid with the membrane that causes the rupturing of the membrane. The liquid does not flow through an already opened valve; the liquid causes an opening of the valve. In this way the gas pocket which is initially provided between the liquid and the membrane delays the contact of the liquid with the membrane. The increase in pressure of the gas during the actuation process may cause a stretching of the membrane, but it does not necessarily effect a breaking of the membrane. The device is configured such that before the membrane is stretched to a breaking point, the gas is displaced away from the membrane allowing the liquid to come into contact with the membrane and effect the opening of the fluid passage way between the two sides of the valve. The stretching of the membrane may shorten the time period which the liquid needs to be in contact with the membrane to effect a dissolving of the membrane, but liquid contact is required.

It will be appreciated from the above that a valve provided in accordance with the present teaching is advantageous at least in that it:

### 1) Readily integrates with mass production techniques

The valving tabs can be premade and placed into the system at multiple points along the fabrication/assembly of a device. As opposed to methods like wax valving no special machinery is needed to keep waxes at liquid temperature for dispensing. Also (moderate) heating of the device, e.g. for running thermally controlled reactions, would be possible without compromising the integrity of the valves.

### 2) Eliminates the need for peripheral actuation mechanisms.

The rotational control of the sample liquid itself is the mechanism for actuation. As opposed to methods like wax valving no special machinery (peripheral or otherwise) is needed, e.g. to heat the waxes for actuation. In the variant where the liquid is initially separated from the valve by a pocket, the actuation is implemented by the same actuator which propels the liquid through the microfluidic chip, e.g. a pump or a centrifugal field.

In accordance with another aspect of the present teaching it is possible to provide a valving arrangement which can be usefully employed to provide an arrangement of metering valves and microchannels which can be used to assay m*n sample/reagents on a disk. Such applications may be advantageously used in the context of biomedical applications such as genotyping and drug discovery.

Similarly to that described above, a microfluidic network is provided on a substrate which is arranged to be rotated. Such a substrate may be provided in the form of a cartridge or disk and, as a result of the induced forces arising from a rotation of the substrate, a fluid is pumped radially outward and may become trapped and metered in structures with an outlet at the base. Using such an arrangement it is possible to implement a system whereby increasing the RPM of rotation of the substrate results in fluid leaving the structures through the outlet and entering a catchment/mixing reservoir. This method may be implemented in arrangements whereby the mixing reservoir is vented to atmosphere or closed to atmosphere. It also can be provided in scenarios where multiple mixing reservoirs are present on a chip. In such an implementation each mixing chamber may be fed by at-least two metering/valving structures.

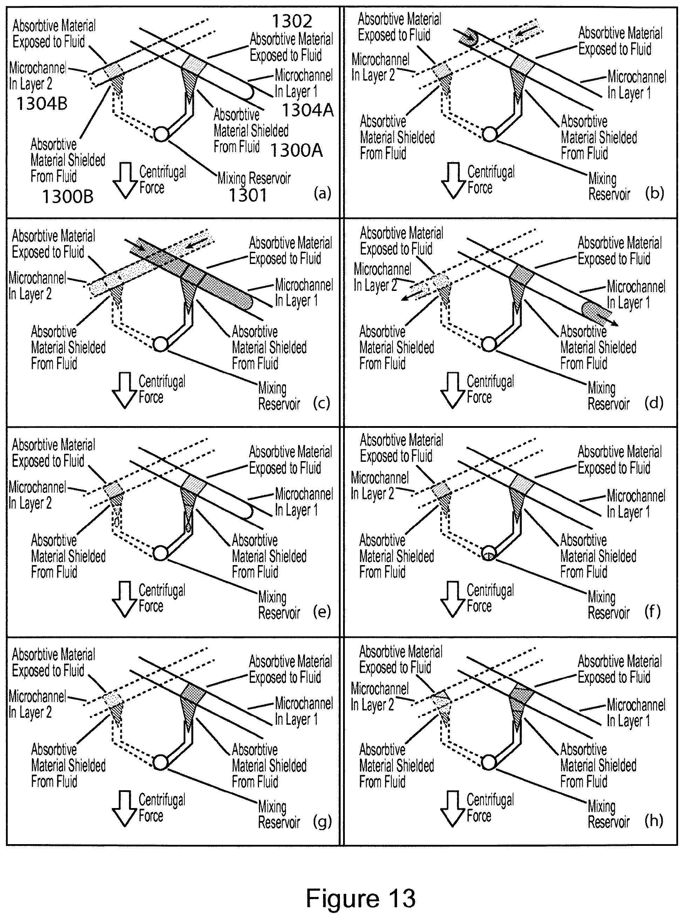

An example of such a configuration is shown in Figure 13 which exemplifies a valving arrangement which is configured to provide a combined metering and aliquoting of a liquid from a metering chamber 1300 to a sample chamber 1301. Desirably the metering chamber is provided immediately upstream of a valve or some other flow control 1303 provided in a fluid sample channel 1302.

As shown in Figure 13, the fluid sample channel 1302 may be provided as a branch off a main fluid channel 1304. In this way a liquid passing in the fluid channel will collect in the metering chamber 1300 and will be retained therein until such time as the valve is opened. The dimensions of the metering chamber will define the ultimate volume of liquid that is subsequently aliquoted from the metering chamber to the sample chamber.

In one arrangement this configuration of the present teaching provides a valving arrangement which may incorporate a cellulose/ paper-based or membrane-based metering structure for use on a centrifugal microfluidic lab-on-a-disc platform. On presenting a valve in an initially closed configuration a finite volume of liquid may be allowed collect in a metering chamber upstream of the valve. Opening the valve allows the flow of this metered volume to a sample or mixing chamber located downstream.

By using a sacrificial membrane, such as paper or a hydrophobic membrane which absorbs and holds back the liquid up to a certain pressure barrier, to provide the valve it is possible to use the properties of the membrane to determine the time of opening of the valve. For example, by increasing the spinning rate the disk is subjected to, the liquid can be forced through the paper/membrane and into a mixing chamber.

In one arrangement the metering chamber is located closer to the axis of rotation of the disc than the mixing chamber such that when the valve is opened the rotation of the disc induces a fluid flow from the metering chamber to the mixing chamber.

Desirably the device is provided as a multi-layer microfluidic device comprising first 1304A and second 1304B fluid channels provided in different layers of the device. The fluid channels are configured relative to one another to provide a combined metering and aliquoting arrangement such that a first and second metered sample provided from each of the first and second fluid channels may be directed to a common mixing chamber 1301 for use in an assay.

The example of Figure 13 illustrates the example of how a microchannel 1304 connects two reservoirs- not shown. Fluid is pumped from one reservoir to the other via centrifugal force. At a given point in the microchannel the fluid comes in contact with a paper tab 1303. This paper tab has been partially exposed to the fluid. A certain amount of liquid is absorbed (as a function of the paper's absorbance, the fluid's time in contact with the paper, the surface area of the paper which is exposed and the entire size/volume of the paper tab) and then retained in the tab. The remaining volume of fluid continues to the lower reservoir leaving a defined volume of fluid in the tab.

The rate of spin rate is increased such that the paper tab can no longer retain the volume of fluid through absorbance. The fluid wicks from the paper into a shaped microchannel and then into a container 1301.

In one configuration microchannels/paper tabs in multiple layers are configured such that two or more paper tabs interface with a mixing reservoir with liquid under centrifugation conditions. Therefore a liquid sample or reagents can be discretised such that elements of M fluid samples can be mixed with N reagent elements to make M*N sample-reagent mixtures.

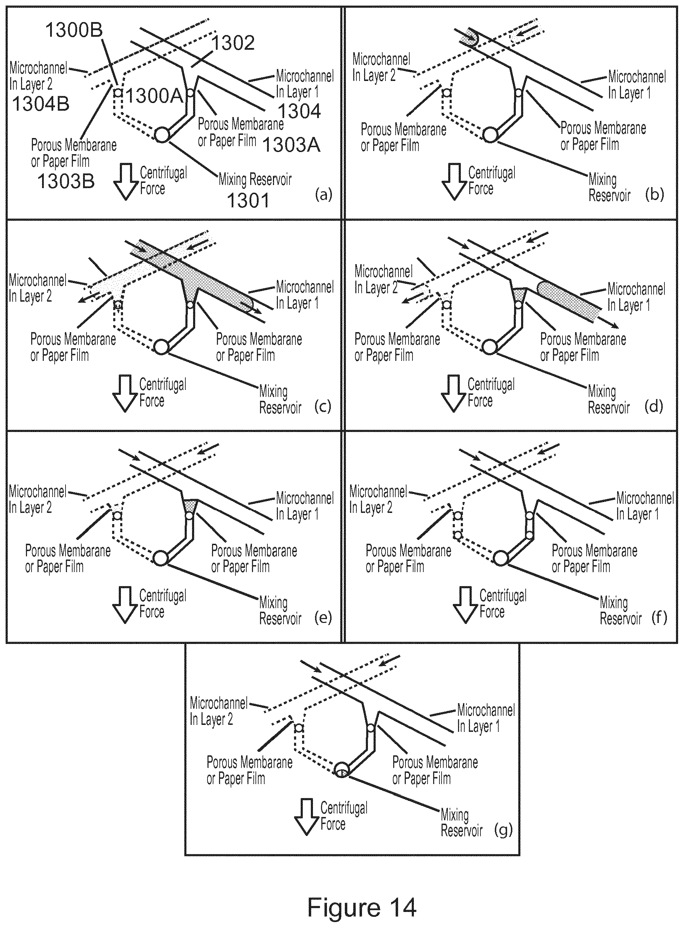

In another configuration shown in Figure 14, where the same reference numerals are used for similar components, the microchannels contain small catchment structures 1300 which retain a specific volume of fluid. A porous membrane (hydrophobic or hydrophilic) or absorptive material (such as paper) is located at the lower part of the catchment structures and serves as a valve 1303. As the fluids (samples or reagents) are pumped form one reservoir to another the centrifugal force is insufficient to force the fluid through these membranes. However, on increasing the centrifugal force the fluid is driven through these membranes or absorptive material such that a substantial portion of the fluids enter a mixing chamber 1301

In another configuration the metering volume 1300 may be pre-loaded with a (possibly immiscible) liquid which is less dense than the mixing liquids. At low centrifugation rates surface tension is sufficient to prevent the assay liquid entering the mixing chamber. However at higher rates the density difference between the sample/reagent liquids and the pre-loaded fluid results in the fluids inverting and the sample/assay re-agents entering the mixing chamber.

In another configuration, one or more of the individual mixing chambers can be pre-loaded with a material which undergoes a phase change (sold to liquid) at low temperatures (<60 C), e.g. a paraffin. This material can be used to prevent fluids entering the metering structure but upon a phase change inverts with the fluids and allows them to mix. By using a material whose phase change properties are related to elevated temperature regimes necessary for performing a specific assay for example pre-heat for PCR, pre-heat and constant temperature for LAMP it is possible to link an opening of a valve to a specific temperature regime used for other purposes within the assay protocol. In another configuration it is possible to use dissolvable solid or gel which substantially occupies the mixing chamber and prevents the liquids from meeting. This dissolvable solid/gel can also be part of the reaction - a jellified PCR reagent for example..

It will be appreciated that each of these configurations share the common feature of providing a network of microchannels with the result that it is possible to mix liquids in a combinatorial fashion. This ability to array M*N fluid elements has major applications in areas such as DNA genotyping. In this applications the steps load fluids into the inlet chambers (M+N pipetting steps) results in M*N combinatorial preparations where in conventional liquid handling methods M*N*2 pipetting steps would be required.

If used with a single DNA sample this approach also has great potential in the field of dPCR.

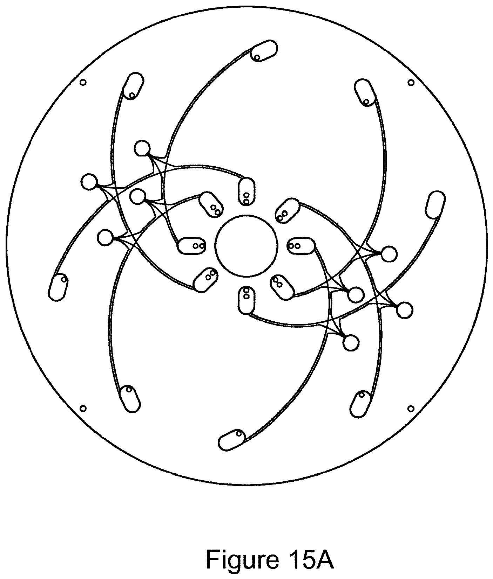

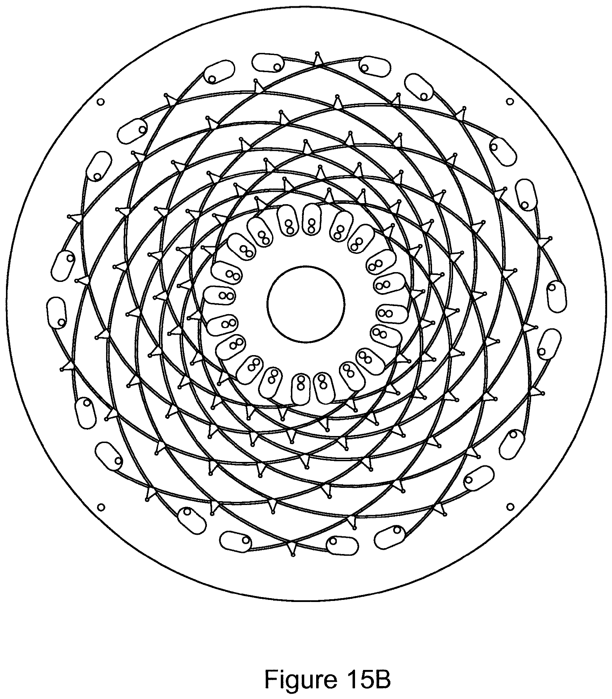

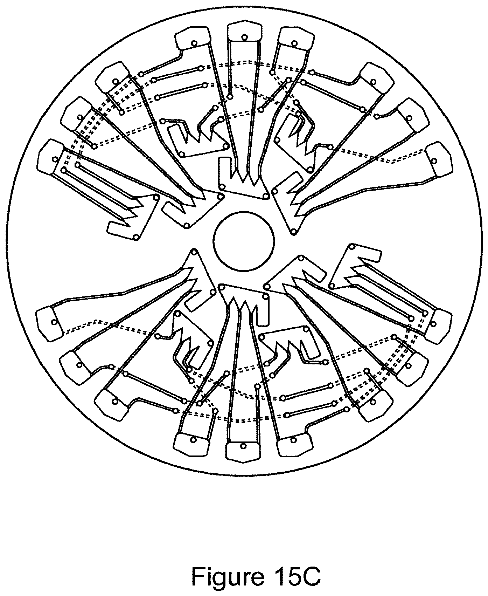

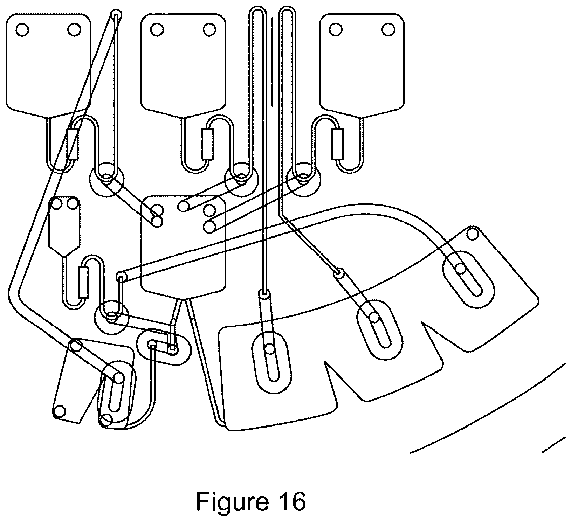

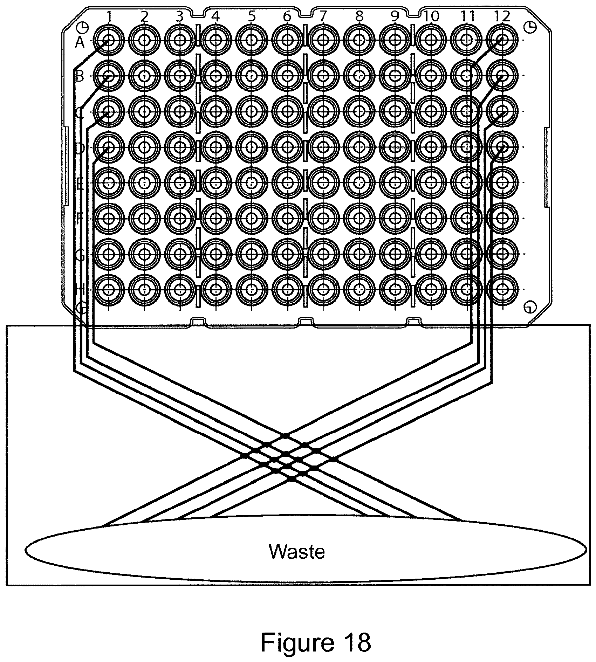

The actual layout of the individual microchannels may follow paths that do not run parallel to or are synced with the direction of rotation of the substrate. For example as shown in Figures 15 and 16, the microchannels may be formed in a spiral/reverse spiral format. In another example- shown in Figure 18 - the microchannels are provided in a microwell plate based configuration. Using a 96 Well format could allow 48*48, 24*72 etc. A 384 well format could allow 192*192; 2 by 96*96. This could also be configured into the same form factor as a conventional microwell plate by rotating from different axes.

By fabricating the microfluidic device such as that shown and described above in a multilayer arrangement it is possible to fabricate a microchannel which moves between layers to avoid intersection.

Using a complex network of individual microchannels and controlling the flow of a fluid through this network through a use of a cascading valve structure it is possible to provide an accurate metering system for controllably metering individual volumes of a fluid to a desired location at a desired time. Such an assembly may be implemented using a metering structure which is fed by valves which allows a controlled flow of a liquid through the device. For example a fluid may be bifurcated/discretised, bifurcated again and once in small enough elements mixed per predefined assay protocols.

Such a complex network may include a plurality of mixing reservoirs. Each of the reservoirs may be fed by one or more single sources. For example in the context of PCR a mixing arrangement on a single rotatable substrate may be provided for m-samples, n-primer/probes and a single source of Taq polymerase master-mix).

By providing a plurality of individual fluid paths and controlling the fluid flow between the individual paths it is possible to provide an arrangement which may be loaded with from a plurality of fluid sources. In one configuration loading cartridges or inlets for the chambers are arrayed at a pitch similar/identical to commonly used micro-titre plates (9mm or 3.5mm pitch).

It is possible in accordance with the present teaching to provide an arrangement whereby liquid flow within a device is controlled using one or more sequential release valving arrangements. In addition it is possible to subject to the device and its contents to spatial or temporal thermal cycling or Isothermal amplification. These techniques can be usefully employed in the provision of PCR, DNA amplification methods such as Loop mediated isothermal amplification (LAMP) and NASBA.

As was discussed above with reference to Figure 12, a cellulose material may be incorporated into one or more of the individual microchannels and then used as a metering structure. In use, a fluid flows over the cellulose material and a discrete volume is absorbed. The excess fluid flows on to the next metering structure/waste. Increasing the rate of centrifugation forces the fluid downwards through the paper and into the mixing reservoirs.

By providing a network which incorporates a metering structure such as described with reference to Figure 13, it is possible to separate the metering structure from a mixing reservoir using a membrane. By increasing the rate of rotation of the substrate it is possible to force a fluid through this membrane. The membrane may be formed from a variety of materials such as cellulose or paper based material. Any other absorptive material could also be used. It is also possible to utilise the properties of a hydrophobic or hydrophilic membrane. The small pore sizes of these membranes (typically in the range 0.1 um-5um or 5um-50um) provide the valve with a well- defined, and increased, flow resistance compared to an open channel or typical capillary burst valve used on conventional centrifugal microfluidics. These increased burst frequencies mean the valves will not burst until the centrifugal force is increased significantly. This large step-change ensures that the typical dependency of capillary burst valves on radial location on a disk is mitigated.

In this example of providing a metering which doubles as an overflow structure it is possible to provide a dissolvable film separating it from the mixing reservoir. Similarly to that described above with reference to the sacrificial membrane of the sacrificial valve, a pneumatic pocket may be provided which functions to prevent the dissolvable film from coming into contact with the fluid at specific RPMs. By increasing the RPM it is possible to force the fluid into contact with the dissolvable film valve, removing it and allowing the liquid to flow into the mixing reservoir (Figure 14).

It is also possible to provide the metering structure as an overflow structure with a dissolvable film separating it from the mixing reservoir. In such a scenario the dimensions of the chambers are selected such that the fluid has sufficient time to fill the metering structure and overflow before the dissolvable film dissolves and allows the fluids to enter the mixing reservoir. Such an arrangement may be provided without any change in the dynamic forces applied to the device- for example without any increase in RPM of the disk.

The present teaching also provides an arrangement where no membrane is used and the mixing chamber is pre-loaded/filled with an immiscible fluid/material. Such a material is lighter than aqueous/water. By judiciously providing a geometry of the channel linking the metering structures and mixing chamber the presence of the immiscible fluid is sufficient to prevent the aqueous fluid displacing the immiscible fluid. Choices for such an immiscible fluid include an oil. Where an oil is used, the oil advantageously prevents evaporation of the sample fluids once in the mixing chamber or results in improved mixing of the reagents due to the merging of aqueous droplets in an oil background. This may be particularly advantageously employed in techniques such as PCR genotyping or qPCR for screening.

It will be appreciated that the above disclosure provides exemplary arrangements of a rotatable microfluidic device provided on a centrifugal platform and configured to selectively direct liquids through a predetermined path using one or more valves. In one configuration the device comprises a first valve in pneumatic communication with an actuation member that functions as a control valve of the device. The device is configured such that actuation of the actuation member effects a retraction of a gas spacer provided in front of, or, upstream of the first valve to allow a liquid come into contact with and dissolve the first valve. Desirably, this actuation of the actuation member and the subsequent dissolution and opening of the first valve can be event triggered so as to allow for cascading events which mirror a predetermined number of steps in an assay. This sequential opening provides for a selective control of the flow of a liquid within the microfluidic device. In the context of an event triggered arrangement a plurality of individual valves may be provided on the same device and individually actuated dependent on certain parameters or conditions being met.

For example it is possible to provide an arrangement where individual valves are pulse actuated in response to changes to the rotation frequency of the rotatable device or disc. In this way the timing of the valve actuations is governed by the nature of the valve, i.e. the materials from which they are made and their orientation within the overall disc architecture, while the time at which the valves actuate is governed by changes in disc spin rate. By placing a plurality of valves in series, it is possible to use the disc spin rate to trigger valves.

In an example of one configuration, which could be considered analogous to a high pass arrangement, a valving arrangement comprising a pneumatic chamber sealed by both a control valve and a release valve is provided. The release valve could comprise a dissolvable membrane - similar to that described previously. The membrane may be recessed in a dead-end chamber and with the control valve provided in an initially closed configuration, liquid cannot enter the pneumatic chamber sufficiently to wet and dissolve the membrane. However, once the control valve is actuated to adopt an open configuration, the valve in effect becomes a burst valve where the membrane will not be wetted unless the spin rate increases above a critical frequency. Thus, opening the control valve puts the release valve in an openable state, or at least primes the release valve. Unless these two parameters are met (control valve opened and the disc rotating above a critical spin rate) the release valve will not open. In this way rotating the disc at a pulsed rotation rate can be used to selectively actuate individual ones of the valves.

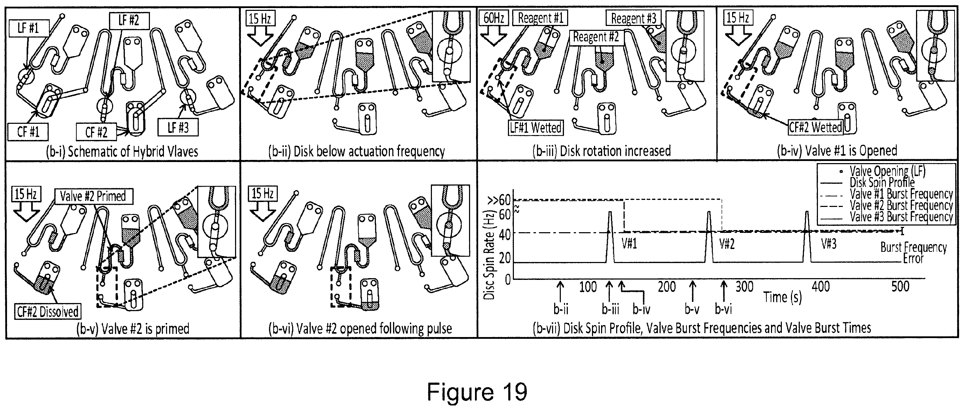

Figure 19 shows in schematic form such an example whereby a plurality (three) valving arrangements are provided - each of the three valving arrangements featuring a control valve and a release valve. With both valves sealed the liquid will not contact and open the dissolvable films of the valves at any typical disc spin rate. When the control valve is opened below a typical spin rate the release valve will not open. However, with the control valve opened, increasing the disc spin rate will effect opening of this release valve. It is clear from the timing sequence of Figure 19 that by pulsing the rotation rate of the disc individual valves can be actuated.

In another arrangement which is analogous to a low-pass configuration the rotatable disc is configured to implement event-triggered flow control. Such an arrangement may include a pneumatic chamber provided between a restrained liquid and a release valve incorporating a dissolvable film, in the form for example of a classical siphon geometry. With a control valve sealed, the liquid cannot enter the pneumatic chamber and dissolve the dissolvable film at any spin rates. Similarly, with the control valve opened and the disc spinning above a critical frequency, the centrifugal force is sufficiently strong to prevent siphon priming. Similarly to that described above with respect to the high-pass configuration by reducing the spin rate at this point it is possible to prime the siphon-based valve where the control valve opened but any siphon valve with an intact control valve will not be primed. Using an electrical clock timing analogy, the actuation of the valves may be timed to be coincident with rising and falling edges of a pulse signal which changes the rotation rate of the disc on which the valves are provided. The increase in rotation or spin rate of the disc can be considered as being achieved by increasing the spin rate from a low level to a high level, analogous to a rising edge. By integrating a capillary valve between the siphon and the dissolvable film, (which is inherent in the rapidly prototyped geometries due to the shape of the microchannel) means the dissolvable valve is only wetted on the rising-edge of the pulse; thus providing even greater process control.

In another configuration the present teaching provides a valving arrangement comprising a selective actuation mechanism facilitated by the sequential passing of different liquids passed the valve. In yet another configuration the present teaching provides a multilayer microfluidic device comprising first and second channels provided in different layers of the device, each of the first and second channels leading a common destination and providing an integrated metering and aliquoting arrangement.

## Claims

1. A rotatable device comprising a microfluidic network of a plurality of microchannels, the network comprising a first release valve (210, 300) comprising a dissolvable membrane, the dissolvable membrane being dissolvable on contact with a working liquid (214, 325) to effect an opening of the first release valve and **characterised in that** the first release valve is in fluid communication via a microchannel (305) with an actuation member (220, 301), the actuation member defining a control valve of the device, the device further comprising a fluid spacer (213) provided upstream (310) of the first release valve, the fluid spacer separating the dissolvable membrane of the first release valve (210, 300) from the working liquid (214, 325) and wherein operable actuation of the actuation member removes a counteracting force that was previously serving to prevent the working liquid (214, 325) progressing forwardly towards the first release valve (300) and allows the working liquid (214, 325) reach the release valve (300) by causing a retraction of the fluid spacer (213) away from the dissolvable membrane and allowing the working liquid (214, 325) to come into contact with and dissolve the dissolvable membrane which effects an opening of the first release valve (210, 300).

2. The device of claim 1 comprising a plurality of actuation members in fluid communication with the first release valve and configured to provide an OR routing arrangement.

3. The device of any preceding claim comprising a second release valve, the first release valve and the second release valve each in fluid communication with a single actuation member and configured to provide parallel release of liquid from multiple liquid reservoirs (326); and preferably wherein the actuation member is in fluid communication with a plurality of valves provided upstream of the actuation member, actuation of the actuation member being operably effected through a release of liquid from the plurality of upstream valves.

4. The device of any preceding claim comprising a plurality of release valves and a plurality of control valves, the plurality of release and control valves configured to be responsive to changes in a rotation rate of the device, selective actuation of individual ones of the plurality of release and control valves being effected by changing the rotation rate of the device.

5. The device of any preceding claim configured such that actuation of the actuation member effects an opening of the first release valve so as to provide a sequential opening of individual fluid channels within the microfluidic device and the selective control of the flow of the working liquid within the microfluidic device; and preferably wherein the actuation member comprises a dissolvable membrane which selectively dissolves on contact with a predetermined liquid.

6. The device of any preceding claim wherein the first release valve comprises a liquid dissolvable film, the valve being located within a microchannel in fluid communication with an outflow (320); wherein the actuation member comprises a gas-tight barrier and the fluid spacer comprises a compressed gas and wherein operably a bringing of the liquid into contact with the first release valve dissolves this valve and opens a path for the working liquid into another microchannel of the microfluidic network.

7. The device of any preceding claim wherein the actuation member comprises a gas-tight barrier and the fluid spacer comprises a compressed gas and the device is configured such that when the first release valve and actuation member are provided in a normally closed configuration the working liquid can be operably compressed into a pneumatic chamber upstream of the first release valve and is separated from the first release valve by the compressed gas, the compressed gas providing a gas pocket (327) between a sacrificial membrane of the first release valve and the working liquid and prevents the working liquid coming into contact with the sacrificial membrane; and further configured such that an opening of the actuation member creates a vent to the pneumatic chamber and the reduced pressure allows the working liquid to reach the first release valve.

8. The device of any preceding claim comprising a plurality of fluid paths defining a network and wherein the network comprises a channel defining a fluid communication path between the first release valve and actuation member, the channel being dimensioned to restrict flow of a liquid through the actuation member; and further wherein the channel defines a barrier, wherein the barrier is at least one of
a physical barrier;
resultant from the shape of a fluid path between the first release valve and the actuation member;
a surface treatment of a fluid path between the first release valve and the actuation member;
a gas-permeable, liquid-impermeable membrane; or
a tortuous path;
and wherein the channel extends radially inwardly, relative to an axis of rotation (1202) of the device, so as to provide a geometric barrier to prevent a liquid being centrifugally pumped through the actuation member; and wherein the channel defines a syphon; and preferably wherein the channel adopts a U-shaped path, the bend defined by the U being proximal to the axis of rotation (1202) of the device; and wherein the network comprises a channel defining a fluid communication path between the first release valve and actuation member, the channel comprising a gas permeable, but liquid impermeable membrane.

9. The device of any preceding claim wherein the actuation member is actuatable through external stimulus such as mechanical, pressure, acoustic, chemical, thermal and irradiation or through contact with some liquid or gas.

10. The device of any preceding claim wherein the actuation member comprises a dissolvable film which is openable through contact with a liquid or a deformable membrane which is deformed through external stimulus.

11. The device of any preceding claim wherein a rate of breakdown of the fluid spacer is controlled by providing the vent in fluid communication with the fluid spacer, wherein the vent comprises a gas permeable solid matrix.

12. The device of any preceding claim primed to include the fluid spacer provided between the working liquid and the sacrificial member of the valve; and preferably wherein a time delay between actuation of the actuation member and an opening of the first release valve is dependent on the rate of breakdown of the fluid spacer and the subsequent dissolution rate of the sacrificial membrane; and wherein properties of the working liquid are matched to properties of the sacrificial membrane to control a dissolution rate of the membrane.

13. The device of any preceding claim configured to be operably coupled to drive means to provide centrifugally or rotationally induced artificial gravity conditions to induce flow of a liquid within the device.

14. The device of any preceding claim comprising a gas permeable, liquid impermeable membrane between the first release valve and the actuation member.

15. The device of any preceding claim wherein the liquid is a working liquid of the device, the device further comprising an ancillary liquid (525) operably used to effect an actuation of the actuation member.

## Patentansprüche

1. Drehbare Vorrichtung, umfassend ein Mikrofluidnetz einer Vielzahl von Mikrokanälen, wobei das Netz ein erstes Ablassventil (210, 300) umfasst, umfassend eine auflösbare Membran, wobei die auflösbare Membran bei Kontakt mit einer Arbeitsflüssigkeit (214, 325) auflösbar ist, um eine Öffnung des ersten Ablassventils zu bewirken, und **gekennzeichnet dadurch, dass** das erste Ablassventil über einen Mikrokanal (305) mit einem Betätigungselement (220, 301) in Fluidverbindung steht, wobei das Betätigungselement ein Steuerventil der Vorrichtung definiert, wobei die Vorrichtung weiterhin einen Flüssigkeitsabstandhalter (213) umfasst, der stromaufwärts (310) vom ersten Ablassventil vorgesehen ist, und wobei der Flüssigkeitsabstandhalter die auflösbare Membran des ersten Ablassventils (210, 300) von der Arbeitsflüssigkeit (214, 325) trennt, und wobei die operable Betätigung des Betätigungselements eine Gegenkraft entfernt, die vorher dazu diente, zu verhindern, dass die Arbeitsflüssigkeit (214, 325) zum ersten Ablassventil (300) hin weiterfließt, und sie ermöglicht, dass die Arbeitsflüssigkeit (214, 325) das Ablassventil (300) erreicht, indem sie ein Zurückziehen des Flüssigkeitsabstandhalters (213) weg von der auflösbaren Membran verursacht und ermöglicht, dass die Arbeitsflüssigkeit (214, 325) in Kontakt mit der auflösbaren Membran kommt und diese auflöst, was eine Öffnung des ersten Ablassventils (210, 300) bewirkt.

2. Vorrichtung nach Anspruch 1, die eine Vielzahl von Betätigungselementen in Fluidverbindung mit dem ersten Ablassventil umfasst und zur Bereitstellung einer ODER-Leitweganordnung konfiguriert ist.

3. Vorrichtung nach einem der vorhergehenden Ansprüche, die ein zweites Ablassventil umfasst, wobei das erste Ablassventil und das zweite Ablassventil jeweils in Fluidverbindung mit einem einzigen Betätigungselement stehen, und die so konfiguriert ist, dass sie einen parallelen Ablass von Flüssigkeit aus mehreren Flüssigkeitsbehältern (326) bereitstellt; und wobei vorzugsweise das Betätigungselement in Fluidverbindung mit einer Vielzahl von Ventilen steht, die stromaufwärts des Betätigungselements vorgesehen sind, wobei die Betätigung des Betätigungselements operabel durch einen Ablass von Flüssigkeit aus der Vielzahl von stromaufwärts gelegenen Ventilen bewirkt wird.

4. Vorrichtung nach einem der vorhergehenden Ansprüche, die eine Vielzahl von Ablassventilen und eine Vielzahl von Steuerventilen umfasst, wobei die Vielzahl von Ablass- und Steuerventilen so konfiguriert ist, um auf Änderungen einer Drehgeschwindigkeit der Vorrichtung zu reagieren, wobei die selektive Betätigung einzelner der Vielzahl von Ablass- und Steuerventilen durch Änderung der Drehgeschwindigkeit der Vorrichtung bewirkt wird.

5. Vorrichtung nach einem der vorhergehenden Ansprüche, so konfiguriert, dass die Betätigung des Betätigungselements eine Öffnung des ersten Ablassventils bewirkt, um eine sequentielle Öffnung einzelner Fluidkanäle innerhalb der Mikrofluidvorrichtung sowie selektive Steuerung des Flusses der Arbeitsflüssigkeit innerhalb der Mikrofluidvorrichtung bereitzustellen; und wobei vorzugsweise das Betätigungselement eine auflösbare Membran umfasst, die sich selektiv bei Kontakt mit einer vorgegebenen Flüssigkeit auflöst.

6. Vorrichtung nach einem der vorhergehenden Ansprüche, wobei das erste Ablassventil einen flüssigkeitslöslichen Film umfasst, und wobei sich das Ventil innerhalb eines Mikrokanals in Fluidverbindung mit einem Ausfluss (320) befindet; wobei das Betätigungselement eine gasdichte Barriere umfasst und der Flüssigkeitsabstandhalter ein Druckgas umfasst und wobei das operable Inkontaktbringen der Flüssigkeit mit dem ersten Ablassventil dieses Ventil auflöst und einen Weg für die Arbeitsflüssigkeit in einen anderen Mikrokanal des Mikrofluidnetzes öffnet.

7. Vorrichtung nach einem der vorhergehenden Ansprüche, wobei das Betätigungselement eine gasdichte Barriere umfasst und der Flüssigkeitsabstandhalter ein Druckgas umfasst und die Vorrichtung so konfiguriert ist, dass, wenn das erste Ablassventil und das Betätigungselement in einer normalerweise geschlossenen Konfiguration bereitgestellt sind, die Arbeitsflüssigkeit operabel in eine pneumatische Kammer stromaufwärts vom ersten Ablassventil komprimiert werden kann und vom ersten Ablassventil durch das Druckgas getrennt ist; wobei das Druckgas eine Gastasche (327) zwischen einer Opfermembran des ersten Ablassventils und der Arbeitsflüssigkeit bereitstellt und verhindert, dass die Arbeitsflüssigkeit mit der Opfermembran in Kontakt kommt; und die weiterhin so konfiguriert ist, dass eine Öffnung des Betätigungselements eine Entlüftung zur pneumatischen Kammer schafft und der reduzierte Druck ermöglicht, dass die Arbeitsflüssigkeit das erste Ablassventil erreicht.

8. Vorrichtung nach einem der vorhergehenden Ansprüche, die eine Vielzahl von Fluidbahnen, die ein Netz definieren, umfasst, und wobei das Netz einen Kanal umfasst, der einen Fluidverbindungsweg zwischen dem ersten Ablassventil und Betätigungselement definiert, wobei der Kanal so dimensioniert ist, dass er den Fluss einer Flüssigkeit durch das Betätigungselement einschränkt; und wobei der Kanal weiterhin eine Barriere definiert, wobei die Barriere mindestens eines ist von einer physischen Barriere;
resultierend aus der Form einer Fluidbahn zwischen dem ersten Ablassventil und dem Betätigungselement;
einer Oberflächenbehandlung einer Fluidbahn zwischen dem ersten Ablassventil und dem Betätigungselement;
einer gasdurchlässigen, flüssigkeitsundurchlässigen Membran; oder
einer gewundenen Bahn;
und wobei der Kanal radial nach innen verläuft, relativ zu einer Rotationsachse (1202) der Vorrichtung, um eine geometrische Barriere bereitzustellen, um zu verhindern, dass eine Flüssigkeit zentrifugal durch das Betätigungselement gepumpt wird; und wobei der Kanal einen Saugheber definiert; und wobei vorzugsweise der Kanal eine U-förmigen Bahn annimmt, wobei die Biegung definiert ist durch die proximale Lage des U zur Rotationsachse (1202) der Vorrichtung; und wobei das Netz einen Kanal umfasst, der einen Fluidverbindungsweg zwischen dem ersten Ablassventil und dem Betätigungselement umfasst, wobei der Kanal eine gasdurchlässige, jedoch flüssigkeitsundurchlässige Membran umfasst.

9. Vorrichtung nach einem der vorhergehenden Ansprüche, wobei das Betätigungselement operabel ist durch einen externen Stimulus, wie zum Beispiel mechanisch, Druck, akustisch, chemisch, thermisch und Bestrahlung oder durch Inkontaktkommen mit einer Flüssigkeit oder einem Gas.

10. Vorrichtung nach einem der vorhergehenden Ansprüche, wobei das Betätigungselement einen auflösbaren Film umfasst, der durch Kontakt mit einer Flüssigkeit oder einer deformierbaren Membran öffenbar ist, die durch einen externen Stimulus verformt wird.

11. Vorrichtung nach einem der vorhergehenden Ansprüche, wobei eine Abbaugeschwindigkeit des Flüssigkeitsabstandhalters gesteuert wird, indem die Belüftung in Fluidverbindung mit dem Flüssigkeitsabstandhalter bereitgestellt wird, wobei die Belüftung eine gasdurchlässige feste Matrix ist.

12. Vorrichtung nach einem der vorhergehenden Ansprüche, gerüstet zum Einschluss des Flüssigkeitsabstandhalters, der zwischen der Arbeitsflüssigkeit und dem Opferelement des Ventils vorgesehen ist; und wobei vorzugsweise eine zeitliche Verzögerung zwischen der Betätigung des Betätigungselements und einer Öffnung des ersten Ablassventils abhängig ist von der Abbaugeschwindigkeit des Flüssigkeitsabstandhalters und der anschließenden Auflösungsgeschwindigkeit der Opfermembran; und wobei Eigenschaften der Arbeitsflüssigkeit auf die Eigenschaften der Opfermembran abgestimmt sind, um eine Auflösungsgeschwindigkeit der Membran zu steuern.

13. Vorrichtung nach einem der vorhergehenden Ansprüche, konfiguriert zur operablen Kopplung mit einem Antriebsmittel, um zentrifugal oder rotatorisch induzierte künstliche Schwerkraftbedingungen bereitzustellen, um den Fluss der Flüssigkeit innerhalb der Vorrichtung auszulösen.

14. Vorrichtung nach einem der vorhergehenden Ansprüche, umfassend eine gasdurchlässige, flüssigkeitsundurchlässige Membran zwischen dem ersten Ablassventil und dem Betätigungselement.

15. Vorrichtung nach einem der vorhergehenden Ansprüche, wobei die Flüssigkeit eine Arbeitsflüssigkeit der Vorrichtung ist, und die Vorrichtung weiterhin eine zusätzliche Flüssigkeit (525) umfasst, die operabel zur Bewirkung einer Betätigung des Betätigungselements verwendet wird.

## Revendications

1. Dispositif rotatif comprenant un réseau microfluidique d'une pluralité de microcanaux, le réseau comprenant une première vanne de libération (210, 300) comprenant une membrane soluble, la membrane soluble étant apte à se dissoudre lors d'un contact avec un liquide de travail (214, 325) pour entraîner une ouverture de la première vanne de libération et **caractérisé par le fait que** la première vanne de libération est en communication fluidique par l'intermédiaire d'un microcanal (305) avec un élément d'actionnement (220, 301), l'élément d'actionnement définissant une vanne de commande du dispositif, le dispositif comprenant en outre un élément d'espacement fluide (213) situé en amont (310) de la première vanne de libération, l'élément d'espacement fluide séparant la membrane soluble de la première vanne de libération (210, 300) vis-à-vis du liquide de travail (214, 325), et l'actionnement fonctionnel de l'élément d'actionnement éliminant une force d'opposition qui servait précédemment à empêcher le liquide de travail (214, 325) de progresser vers l'avant en direction de la première vanne de libération (300) et permettant au liquide de travail (214, 325) d'atteindre la vanne de libération (300) en entraînant un retrait de l'élément d'espacement fluide (213) à l'écart de la membrane soluble et permettant au liquide de travail (214, 325) d'entrer en contact avec et de dissoudre la membrane soluble, ce qui entraîne une ouverture de la première vanne de libération (210, 300).

2. Dispositif selon la revendication 1, comprenant une pluralité d'éléments d'actionnement en communication fluidique avec la première vanne de libération et configurés pour fournir un agencement d'acheminement à osmose inverse.

3. Dispositif selon l'une quelconque des revendications précédentes, comprenant une seconde vanne de libération, la première vanne de libération et la seconde vanne de libération étant chacune en communication fluidique avec un unique élément d'actionnement et configurées pour entraîner la libération en parallèle de liquide à partir de multiples réservoirs de liquide (326) ; et, de préférence, l'élément d'actionnement étant en communication fluidique avec une pluralité de vannes situées en amont de l'élément d'actionnement, l'actionnement de l'élément d'actionnement étant entraîné de manière fonctionnelle par l'intermédiaire d'une libération de liquide à partir de la pluralité de vannes en amont.

4. Dispositif selon l'une quelconque des revendications précédentes, comprenant une pluralité de vannes de libération et une pluralité de vannes de commande, la pluralité de vannes de libération et de commande étant configurées pour être sensibles aux changements d'une vitesse de rotation du dispositif, l'actionnement sélectif de vannes individuelles parmi la pluralité de vannes de libération et de commande étant réalisé par changement de la vitesse de rotation du dispositif.

5. Dispositif selon l'une quelconque des revendications précédentes, configuré de telle sorte que l'actionnement de l'élément d'actionnement entraîne une ouverture de la première vanne de libération de façon à entraîner une ouverture séquentielle de canaux de fluide individuels à l'intérieur du dispositif microfluidique et la commande sélective de l'écoulement du liquide de travail à l'intérieur du dispositif microfluidique ; et, de préférence, l'élément d'actionnement comprenant une membrane soluble qui se dissout de manière sélective au contact d'un liquide prédéterminé.

6. Dispositif selon l'une quelconque des revendications précédentes, dans lequel la première vanne de libération comprend un film soluble dans un liquide, la vanne étant située à l'intérieur d'un microcanal en communication fluidique avec une sortie (320) ; l'élément d'actionnement comprenant une barrière étanche aux gaz et l'élément d'espacement fluide comprend un gaz comprimé, et en fonctionnement amener le liquide en contact avec la première vanne de libération dissout cette vanne et ouvre un trajet pour le liquide de travail dans un autre microcanal du réseau microfluidique.

7. Dispositif selon l'une quelconque des revendications précédentes, dans lequel l'élément d'actionnement comprend une barrière étanche aux gaz et l'élément d'espacement fluide comprend un gaz comprimé et le dispositif est configuré de telle sorte que, lorsque la première vanne de libération et l'élément d'actionnement sont disposés dans une configuration normalement fermée, le liquide de travail peut être comprimé de manière fonctionnelle dans une chambre pneumatique en amont de la première vanne de libération et est séparé de la première vanne de libération par le gaz comprimé, le gaz comprimé fournissant une poche de gaz (327) entre une membrane sacrificielle de la première vanne de libération et le liquide de travail et empêchant le liquide de travail d'entrer en contact avec la membrane sacrificielle ; et est en outre configuré de telle sorte qu'une ouverture de l'élément d'actionnement crée un évent vers la chambre pneumatique et la pression réduite permet au liquide de travail d'atteindre la première vanne de libération.

8. Dispositif selon l'une quelconque des revendications précédentes, comprenant une pluralité de trajets de fluide définissant un réseau, et le réseau comprenant un canal définissant un trajet de communication fluidique entre la première vanne de libération et l'élément d'actionnement, le canal étant dimensionné pour limiter l'écoulement d'un liquide à travers l'élément d'actionnement ; et, en outre, le canal définissant une barrière, la barrière étant au moins une parmi
une barrière physique ;
résultant de la forme d'un trajet de fluide entre la première vanne de libération et l'élément d'actionnement ;
un traitement de surface d'un trajet de fluide entre la première vanne de libération et l'élément d'actionnement ;
une membrane perméable aux gaz, imperméable aux liquides ; ou
un trajet sinueux ;
et le canal s'étendant radialement vers l'intérieur, par rapport à un axe de rotation (1202) du dispositif, de façon à fournir une barrière géométrique pour empêcher un liquide d'être pompé de manière centrifuge par l'intermédiaire de l'élément d'actionnement ; et
le canal définissant un siphon ; et, de préférence, le canal adoptant un trajet en forme de U, la courbure définie par le U étant proximale à l'axe de rotation (1202) du dispositif ; et le réseau comprenant un canal définissant un trajet de communication fluidique entre la première vanne de libération et l'élément d'actionnement, le canal comprenant une membrane perméable aux gaz, mais imperméable aux liquides.

9. Dispositif selon l'une quelconque des revendications précédentes, dans lequel l'élément d'actionnement est actionnable par l'intermédiaire d'un stimulus externe tel qu'un stimulus mécanique, de pression, acoustique, chimique, thermique et de rayonnement ou par contact avec un liquide ou gaz.

10. Dispositif selon l'une quelconque des revendications précédentes, dans lequel l'élément d'actionnement comprend un film soluble qui est apte à s'ouvrir par contact avec un liquide ou une membrane déformable qui est déformée par l'intermédiaire d'un stimulus externe.

11. Dispositif selon l'une quelconque des revendications précédentes, dans lequel une vitesse de rupture de l'élément d'espacement fluide est commandée en fournissant l'évent en communication fluidique avec l'élément d'espacement fluide, l'évent comprenant une matrice solide perméable aux gaz.

12. Dispositif selon l'une quelconque des revendications précédentes, préparé pour avoir l'élément d'espacement fluide situé entre le liquide de travail et l'élément sacrificiel de la vanne ; et, de préférence, un délai entre l'actionnement de l'élément d'actionnement et une ouverture de la première vanne de libération étant dépendant de la vitesse de rupture de l'élément d'espacement fluide et de la vitesse de dissolution ultérieure de la membrane sacrificielle ; et des propriétés du liquide de travail correspondant à des propriétés de la membrane sacrificielle pour commander une vitesse de dissolution de la membrane.

13. Dispositif selon l'une quelconque des revendications précédentes, configuré pour être couplé de manière fonctionnelle à des moyens d'entraînement pour fournir des conditions de gravité artificielle induite de manière centrifuge ou rotative de façon à induire l'écoulement d'un liquide à l'intérieur du dispositif.

14. Dispositif selon l'une quelconque des revendications précédentes, comprenant une membrane perméable aux gaz, imperméable aux liquides, entre la première vanne de libération et l'élément d'actionnement.

15. Dispositif selon l'une quelconque des revendications précédentes, dans lequel le liquide est un liquide de travail du dispositif, le dispositif comprenant en outre un liquide auxiliaire (525) utilisé de manière fonctionnelle pour entraîner un actionnement de l'élément d'actionnement.
